# EUROPEAN PATENT SPECIFICATION

(11) **EP 3 566 080 B1**
(45) Date of publication and mention of the grant of the patent: **04.11.2026**
(21) Application number: 18709152.5
(22) Date of filing: 09.01.2018
(51) Int. Cl.: G01V 3/38, G01V 11/00, G01C 21/16, G01V 3/06

(54) **TRACKED DISTANCE MEASURING DEVICES, SYSTEMS, AND METHODS**
VORRICHTUNGEN, SYSTEME UND VERFAHREN ZUR MESSUNG VON ERFASSTER ENTFERNUNG
DISPOSITIFS, SYSTÈMES ET PROCÉDÉS DE MESURE DE DISTANCE AVEC SUIVI

(30) Priority: 09.01.2017 US 201762444310 P
(43) Date of publication of application: 13.11.2019
(73) Proprietor: SeeScan, Inc., San Diego, CA 92123-1813 (US)
(72) Inventor: OLSSON, Mark, San Diego, CA 92123 (US); MARTIN, Michael, San Diego, CA 92123 (US)
(74) Representative: Fennell, Gareth Charles
(86) International application number: PCT/US2018/013014
(87) International publication number: WO 2018/129549

(56) References cited:
- WO-A1-2016/003938
- US-A1- 2014 313 321
- US-A1- 2015 077 120
- US-A1- 2015 123 664
- US-A1- 2016 187 522
- US-B1- 7 443 154
- US-B1- 7 755 360
- US-B1- 9 081 109
- US-B1- 9 465 129

## Description

### FIELD

This disclosure relates generally to distance measuring devices, systems, and methods. More specifically, but not exclusively, the disclosure relates to tracked distance measuring devices, systems, and methods for use with utility locating and mapping systems to identify and map points of interest (POIs).

### BACKGROUND

In typical mapping systems, one or more points of interest (POIs) may be included with other map information to show a location or feature within the mapped area. For example, locations of important landmarks or tourist attractions, hospitals or other service facilities, utility assets such as fire plugs, covers, pipe penetrations, electrical boxes, and the like, environmental features that can distort signals (such as those used in utility locating), and other items, features, or characteristics which may be of interest or otherwise desirable to be used in a mapping system may be included. Including POIs in maps can be useful in future work, such as future locate operations.

Some POIs may also be arbitrarily selected by a user and need not specifically correspond to an attraction or feature, but may nevertheless provide useful future information. In some mapping systems, particularly digital mapping systems, points of interest may further include metadata associated with each feature (*e.g*., information about that location or services offered or the like). Creation of such POIs often requires manual input by a user and/or image recognition algorithms to identify them. Manual input of points of interest can be labor intensive and subject to human error, whereas use of image recognition algorithms may fail to correctly identify and/or fail to provide the degree of location accuracy required in some mapping systems.

Utility locating systems are frequently used to determine the presence or absence and location of utility lines within the ground ("buried utilities" or "buried objects") and map their locations. Such systems may include a portable utility locator to measure magnetic field signals emitted from conductive utility lines, and/or other signals within the mapped area to determine the utility's location (commonly known as a "locate"). In many utility locating operations, various things within the locating operation (which may be POIs) can have a measurable effect on signals received at the utility locator device, affecting locating and mapping accuracy and reliability. For example, other conductive objects in proximity to a utility pipe or cable, other magnetic field sources, and/or environmental conditions may distort magnetic field signals emitted from utilities. In addition, it may be useful to map and provide precise locations for various other utility assets and infrastructure in a locate area, such as, for example, power poles, signs, valves, covers, transformer control systems, metallic structures, and the like. Existing utility locating and mapping systems and devices do not locate, map, or further identify such points of interest, thereby reducing accuracy and reliability. Failure of existing utility mapping systems and devices to identify POIs within the locate area may result in less than ideal fitting of utility location data to actual mapped areas, such as to reference maps.

Accordingly, there is a need for improved devices, systems, and methods to address the above described as well as other problems in the art.

US 2014/313321 A1 describes an optical ground tracking apparatus for use with buried object locators or other instruments or devices. A described ground tracking apparatus integral with or coupled to a buried object locator includes a housing, a plurality of camera modules, a distance measurement module, and a processing element to generate tracking information based on images or video streams from the camera modules in combination with distance data generated from the distance measurement module.

US 7,443,154 B1 describes portable locators for finding and mapping buried objects such as utilities. An articulatable antenna node configuration and the use of Doppler radar and GPS navigation are also described.

US 9,081,109 B1 describes a ground tracking apparatus for connection to a locator or other measurement device and configured to determine position, motion, and/or orientation information. The ground tracking apparatus may include a ground follower assembly including one or more wheels, which may be detachably coupled to a buried object locator system to capture three-dimensional positional and orientation information during a locate process, as well as provide output data or information to be integrated with maps, photographs, drawings, or other data or information.

US 9,465,129 B1 describes that a locator system for locating buried utilities such as conduits, cables, pipes or wires incorporates image-capturing and position and orientation measuring devices such as magnetic compass, accelerometers, gyros, GPS, and DGPS. The system may include other sensors such as gas concentration sensors. The system associates images captured during the locate process with buried utility position data and the other sensor data. These data and images may be further associated with terrain images from satellites or aerial photography to provide a highly precision map and database of buried utility locations and visual images of the burial site. Information so obtained may be transferred to a hand-held personal communication device (such as a smart phone) capable of displaying an augmented or virtual reality display showing the location of buried utilities in combination with photo-images and/or terrain maps.

US 2015/123664 A1 describes integrated buried utility locator systems, including a locator including a marker device excitation transmitter a buried utility locator along with one or more marker devices. In operation a marker device excitation signal is sent from the locator at least partially simultaneously to receiving and processing a buried utility signal.

US 2016/187522 A1 describes buried object locators including various antenna configurations and safety features. A described locator includes a body, one or more antenna nodes coupled to the body, and a safety light assembly disposed on or within the body. The locator may further include a surface light assembly and camera and/or one or more GPS and/or ISM antennas and receiver/sensor modules. The antenna nodes may be gradient and/or dodecahedral antenna nodes.

US 7,755,360 B1 describes a portable self-standing electromagnetic (EM) field sensing locator system with attachments for finding and mapping buried objects such as utilities and with intuitive graphical user interface (GUI) displays. Accessories include a ground penetrating radar (GPR) system with a rotating Tx/Rx antenna assembly, a leak detection system, a multi-probe voltage mapping system, a man-portable laser-range finder system with embedded dipole beacon and other detachable accessory sensor systems are accepted for attachment to the locator system for simultaneous operation in cooperation with the basic locator system. The integration of the locator system with one or more additional devices, such as fault-finding, geophones and conductance sensors, facilitates the rapid detection and localization of many different types of buried objects.

US 2015/077120 A1 describes buried utility transmitters and associated locator devices, systems, and methods used for locating utility lines, pipes, and/or other conductors that are obscured from view. A described buried utility transmitter includes a module generating an output current for provision to the utility so as to generate a magnetic field for detection by a utility locator, with the output current signal having modulated signaling. The transmitter system may include a tray apparatus configured to be removably dockable to the transmitter module or element or a body or frame of the transmitter system.

WO 2016/003938 A1 describes apparatus, systems, and methods for tracking movement over the ground or other surfaces using two or more spaced apart cameras and an associated processing element to detect ground features in images from the cameras and determine tracking parameters based on the position of the detected ground features in the images.

### SUMMARY

In one aspect, there is provided a distance measuring system as defined in claim 1. In another aspect, there is provided a method as defined in claim 12. Features of embodiments are defined in the dependent claims.

Various additional aspects, features, and functions are described below in conjunction with the appended Drawings.

### BRIEF DESCRIPTION OF THE DRAWINGS

The present application may be more fully appreciated in connection with the following detailed description taken in conjunction with the accompanying drawings, wherein:
FIG. 1 illustrates details of one embodiment of a tracked distance measuring device and utility locating system.
FIG. 2A illustrates details of an embodiment of a tracked distance measuring device.
FIG. 2B is a section view of details of the tracked distance measuring device embodiment of FIG. 2A along line 2B - 2B.
FIG. 2C illustrates details of an embodiment of a tracked distance measuring device.
FIG. 2D is a sectional view of details of the tracked distance measuring device embodiment of FIG. 2C along line 2D - 2D.
FIG. 2E illustrates details of a tracked distance measuring device embodiment.
FIG. 2F is a section view of details of the tracked distance measuring device embodiment of FIG. 2E along line 2F - 2F.
FIG. 2G illustrates details of an embodiment of a tracked distance measuring device and utility locating system showing aiming of the tracked distance measuring device.
FIG. 3A illustrates details of an embodiment of a method for POI mapping within a tracked distance measuring device and utility locating system.
FIG. 3B illustrates details of an embodiment of a method for POI mapping within a tracked distance measuring device and utility locating system with correlated user input.
FIG. 4 illustrates details of an embodiment of a method for calculating dipole signal source information.
FIG. 5A illustrates details of an embodiment of a tracked distance measuring device and utility locating system defining measurement terms for method embodiment 550 of FIG. 5C.
FIG. 5B is another illustration of details of a tracked distance measuring device and utility locating system embodiment defining measurement terms for method embodiment 550 of FIG. 5C.
FIG. 5C illustrates details of an embodiment of a method for determining POI location.
FIG. 6 illustrates details of a tracked distance measuring device system example using a different signal receiving device.
FIG. 7 illustrates details of a standalone tracked distance measuring device example.
FIG. 8 illustrates details of a standalone tracked distance measuring device example defining measurement terms for method embodiment 900 of FIG. 9.
FIG. 9 illustrates details of an example of a method for locating and mapping POIs from a standalone tracked distance measuring device.
FIG. 10A illustrates details of a standalone tracked distance measuring device example.
FIG. 10B is a sectional view of details of the standalone tracked distance measuring device example of FIG. 10A along line 10B - 10B.
FIG. 11A illustrates details of an embodiment of a tracked distance measuring device embodiment that accommodates a separate distance meter device.
FIG. 11B is another view of details of the tracked distance measuring device embodiment of FIG. 11A.
FIG. 11C is a section view of details of the tracked distance measuring device embodiment of FIG. 11A along line 11C - 11C.
FIG. 12 illustrates an example operation for tracing a POI with a tracked distance measuring device embodiment.
FIG. 13 illustrates details of an embodiment of a tracked distance measuring device for use in determining the dimensions and geometry of a POI.
FIG. 14A is an illustration details of a locate operation where the distance measuring capabilities are built into an optical ground tracking device embodiment.
FIG. 14B illustrates details of the optical ground tracking device embodiment of FIG. 14A.
FIG. 14C illustrates details of an embodiment of a method for finding a laser spot corresponding to a POI within two or more subsequent camera frames.
FIG. 14D illustrates details of an embodiment of a method for finding the range to a laser spot corresponding to a POI.
FIG. 15 illustrates details of an embodiment of a method for using an optical ground tracking device as a POI mapping device.

### DETAILED DESCRIPTION OF EMBODIMENTS

### Terminology

As used herein, the terms "buried objects," "buried assets," and "buried utilities" include electrically conductive objects such as water and sewer lines, power lines, and other buried conductors, as well as objects located inside walls, between floors in multi-story buildings, or cast into concrete slabs as well as non-conductive utilities and electronic marker devices. They further include other conductive and nonconductive objects disposed below the surface of the ground.

In a typical application a buried object is a pipe, cable, conduit, wire, or other object buried under the ground surface, at a depth of from a few centimeters to meters or more, which has an alternating current flowing in it, with the alternating current generating a corresponding electromagnetic field. Metallic pipes or wires can carry their own conductive current, while non-metallic utilities, such as PVC or EBS pipe, or other non-conductors, may have tracing wires with current flow in them or may have marker devices or other mechanisms to indicate their presence.

In a locate operation, a user, such as a utility company employee, construction company employee, homeowner, or other person attempts to find the utility based on sensing magnetic fields generated by the AC current flow in the utility (or in a tracer wire, RFID-like marker, or other tracing element). The sensed information may be used directly or may be combined with other information to mark the utility, map the utility (*e.g.,* by surface position as defined by latitude/longitude or other surface coordinates, and/or also by depth), and/or for other purposes, such as soil conductivity data collection, magnetic field data collection, geological applications, and the like.

As noted above, locating buried utilities or other assets may be done by receiving AC magnetic field signals emitted from the utilities and then processing these signals in one or more devices commonly denoted as "utility locating devices", "utility locators", or simply "locators."

Utility locators sense the magnetic field component of the electromagnetic signal emitted from a flowing AC current and process the signal accordingly to determine information about the buried object. The fundamentals of utility locating by sensing magnetic fields in well-known and described in the art. Typical locators use one or more horizontal antenna elements to determine when the locator is directly above the utility, and then use vertical or omnidirectional antenna coil arrays to determine depth.

Applicant SeeScan, Inc., a global leader in the field, provides more advanced locators using additional antenna elements, such as multiple omnidirectional antenna arrays, dodecahedral antenna arrays, and other advanced sensing and signal processing techniques and devices, such as, for example, those described in the citedapplications, to determine additional information about the buried utilities as well as their associated environment by measuring and processing multiple magnetic field signals in two or three orthogonal dimensions and over time, position, frequency, phase, as well as other parameters.

Utility locators used in embodiments and examples as described herein may be of the variety described in the citedpatents and patent applications below, or others as are known or developed in the art. Such utility locators include one or more antennas or antenna arrays and electronic circuitry to receive and process magnetic field signal components of electromagnetic signals emitted from multiple sources and/or at multiple frequencies to determine each source's relative (e.g., the user's position over the ground or to some other reference) or to an absolute position (e.g., such as determined by a positioning system receiver such as a GPS receiver, GLONASS, Galileo, or other satellite or terrestrial position system receiver) based on its emitted signals.

As used herein, the term "position" refers to a location in space, typically in three-dimensional (X, Y, Z coordinates or their equivalent) space, as well as a "pose" of the source at that location relative to some other device or location. The pose may be the orientation at that particular location. For example, a signal emitted from a tracked distance measuring device embodiment may be used to determine a position that includes a location in three dimensional space relative to a corresponding device, such as an associated utility locator device or other signal receiving device, as well as the pose or orientation describing the direction and degree of tilt of the signal at that location (with respect to the utility locator or some other reference).

As used herein, "points of interests" or "POIs" may be any point of area or location within the mapped or locate area in which a distance is measured by the rangefinder element of a tracked distance measuring device. The POI may be location or object within a locate area that may affect locating equipment or signals within the locate area or mapping of the area. In some uses, a POI may be any arbitrary point within the work or mapped area that is designated as a POI by a user or device.

### Overview

This disclosure relates generally to tracked distance measuring devices. More specifically, but not exclusively, the disclosure relates to tracked distance measuring devices used within utility locating and mapping systems used to identify and map points of interest.

The disclosures herein may be combined in various embodiments with the disclosures in Applicant's co-assigned patents and patent applications, including transmitter and locator devices and associated apparatus, systems, and methods, as defined in the appended claims, as are described in United States Patent 7,009,399, issued March 7, 2006, entitled OMNIDIRECTIONAL SONDE AND LINE LOCATOR; United States Patent 7,136,765, issued November 14, 2006, entitled A BURIED OBJECT LOCATING AND TRACING METHOD AND SYSTEM EMPLOYING PRINCIPAL COMPONENTS ANALYSIS FOR BLIND SIGNAL DETECTION; United States Patent 7,221,136, issued May 22, 2007, entitled SONDES FOR LOCATING UNDERGROUND PIPES AND CONDUITS; United States Patent 7,276,910, issued October 2, 2007, entitled COMPACT SELF-TUNED ELECTRICAL RESONATOR FOR BURIED OBJECT LOCATOR APPLICATIONS; United States Patent 7,288,929, issued October 30, 2007, entitled INDUCTIVE CLAMP FOR APPLYING SIGNAL TO BURIED UTILITIES; United States Patent 7,332,901, issued February 19, 2008, entitled LOCATOR WITH APPARENT DEPTH INDICATION; United States Patent 7,336,078, issued February 26, 2008, entitled MULTI-SENSOR MAPPING OMNIDIRECTIONAL SONDE AND LINE LOCATORS; United States Patent 7,557,559, issued July 7, 2009, entitled COMPACT LINE ILLUMINATOR FOR LOCATING BURIED PIPES AND CABLES; United States Patent 7,619,516, issued November 17, 2009, entitled SINGLE AND MULTI-TRACE OMNIDIRECTIONAL SONDE AND LINE LOCATORS AND TRANSMITTER USED THEREWITH; United States Patent 7,733,077, issued June 8, 2010, entitled MULTI-SENSOR MAPPING OMNIDIRECTIONAL SONDE AND LINE LOCATORS AND TRANSMITTER USED THEREWITH; United States Patent 7,741,848, issued June 22, 2010, entitled ADAPTIVE MULTICHANNEL LOCATOR SYSTEM FOR MULTIPLE PROXIMITY DETECTION; United States Patent 7,755,360, issued July 13, 2010, entitled PORTABLE LOCATOR SYSTEM WITH JAMMING REDUCTION; United States Patent 9,625,602, issued April 18, 2017, entitled SMART PERSONAL COMMUNICATION DEVICES AS USER INTERFACES; United States Patent 7,830,149, issued November 9, 2010, entitled AN UNDERGROUND UTILITY LOCATOR WITH A TRANSMITTER, A PAIR OF UPWARDLY OPENING POCKETS AND HELICAL COIL TYPE ELECTRICAL CORDS; United States Patent 7,969,151, issued June 28, 2011, entitled PRE-AMPLIFIER AND MIXER CIRCUITRY FOR A LOCATOR ANTENNA; United States Patent 8,013,610, issued September 6, 2011, entitled HIGH-Q SELF TUNING LOCATING TRANSMITTER; United States Patent 8,203,343, issued June 19, 2012, entitled RECONFIGURABLE PORTABLE LOCATOR EMPLOYING MULTIPLE SENSOR ARRAY HAVING FLEXIBLE NESTED ORTHOGONAL ANTENNAS; United States Patent 8,248,056, issued August 21, 2012, entitled BURIED OBJECT LOCATOR SYSTEM EMPLOYING AUTOMATED VIRTUAL DEPTH EVENT DETECTION AND SIGNALING; United States Patent 9,599,499, issued March 21, 2017, entitled SYSTEMS AND METHODS FOR LOCATING BURIED OR HIDDEN OBJECTS USING SHEET CURRENT FLOW MODELS; United States Patent 8,264,226, issued September 11, 2012, entitled SYSTEM AND METHOD FOR LOCATING BURIED PIPES AND CABLES WITH A MAN PORTABLE LOCATORAND A TRANSMITTER IN A MESH NETWORK; United States Patent 9,638,824, issued May 2, 2017, entitled QUAD-GRADIENT COILS FOR USE IN LOCATING SYSTEMS; United States Patent Application 13/677,223, filed November 14, 2012, entitled MULTI-FREQUENCY LOCATING SYSTEMS AND METHODS; United States Patent Application 13/769,202, filed February 15, 2013, entitled SMART PAINT STICK DEVICES AND METHODS; United States Patent Application 13/774,351, filed February 22, 2013, entitled DOCKABLE TRIPODAL CAMERA CONTROL UNIT; United States Patent Application 13/787,711, filed March 6, 2013, entitled DUAL SENSED LOCATING SYSTEMS AND METHODS; United States Patent 8,400,154, issued March 19, 2013, entitled LOCATOR ANTENNA WITH CONDUCTIVE BOBBIN; United States Patent 9,488,747, issued November 8, 2016, entitled DUAL ANTENNA SYSTEMS WITH VARIABLE POLARIZATION; United States Patent Application 13/894,038, filed May 14, 2013, entitled OMNI-INDUCER TRANSMITTING DEVICES AND METHODS; United States Patent Application 13/958,492, filed August 2, 2013, entitled OPTICAL GROUND TRACKING APPARATUS, SYSTEMS AND METHODS; United States Patent 9,599,740, issued March 21, 2017, entitled USER INTERFACES FOR UTILITY LOCATORS; United States Patent Application 14/027,027, filed September 13, 2013, entitled SONDE DEVICES INCLUDING A SECTIONAL FERRITE CORE STRUCTURE; United States Patent Application 14/077,022, filed November 11, 2013, entitled WEARABLE MAGNETIC FIELD UTILITY LOCATOR SYSTEM WITH SOUND FIELD GENERATION; United States Patent 8,547,428, issued October 1, 2013, entitled PIPE MAPPING SYSTEM; United States Patent 8,635,043, issued January 21, 2014, entitled Locator and Transmitter Calibration System; United States Patent Application 14/332,268, filed July 15, 2014, entitled UTILITY LOCATOR TRANSMITTER DEVICES, SYSTEMS, AND METHODS WITH DOCKABLE APPARATUS; United States Patent Application 14/446,145, filed July 29, 2014, entitled UTILITY LOCATING SYSTEMS WITH MOBILE BASE STATION; United States Patent 9,632,199, issued April 25, 2017, entitled INDUCTIVE CLAMP DEVICES, SYSTEMS, AND METHODS; United States Patent Application 14/516,558, filed October 16, 2014, entitled ELECTRONIC MARKER DEVICES AND SYSTEMS; United States Patent Application 14/580,097, filed December 22, 2014, entitled NULLED-SIGNAL LOCATING DEVICES, SYSTEMS, AND METHODS; United States Patent 9,057,754, issued June 16, 2015, entitled ECONOMICAL MAGNETIC LOCATOR APPARATUS AND METHOD; United States Patent Application 14/752,834, filed June 27, 2015, entitled GROUND TRACKING APPARATUS, SYSTEMS, AND METHODS; United States Patent Application 14/797,840, filed July 13, 2015, entitled GROUND-TRACKING DEVICES AND METHODS FOR USE WITH A UTILITY LOCATOR; United States Patent Application 14/798,177, filed July 13, 2015, entitled MARKING PAINT APPLICATOR FOR USE WITH PORTABLE UTILITY LOCATOR; United States Patent 9,081,109, issued July 14, 2015, entitled GROUND-TRACKING DEVICES FOR USE WITH A MAPPING LOCATOR; United States Patent 9,082,269, issued July 14, 2015, entitled HAPTIC DIRECTIONAL FEEDBACK HANDLES FOR LOCATION DEVICES; United States Patent Application 14/802,791, filed July 17, 2015, entitled METHODS AND SYSTEMS FOR SEAMLESS TRANSITIONING IN INTERACTIVE MAPPING SYSTEMS; United States Patent 9,085,007, issued July 21, 2015, entitled MARKING PAINT APPLICATOR FOR PORTABLE LOCATOR; United States Patent Application 14/949,868, filed November 23, 2015, entitled BURIED OBJECT LOCATOR APPARATUS AND SYSTEMS; United States Patent Application 15/006,119, filed January 26, 2016, entitled SELF-STANDING MULTI-LEG ATTACHMENT DEVICES FOR USE WITH UTILITY LOCATORS; United States Patent 9,341,740, issued May 17,2016, entitled OPTICAL GROUND TRACKING APPARATUS, SYSTEMS, AND METHODS; United States Provisional Patent Application 62/350,147, filed June 14, 2016, entitled TRACKABLE DIPOLE DEVICES, METHODS, AND SYSTEMS FOR USE WITH MARKING PAINT STICKS; United States Provisional Patent Application 62/352,731, filed June 21, 2016, entitled SYSTEMS AND METHODS FOR UNIQUELY IDENTIFYING BURIED UTILITIES IN A MULTI-UTILITY ENVIRONMENT; United States Patent 9,411,067, issued August 9, 2016, entitled GROUND-TRACKING SYSTEMS AND APPARATUS; United States Patent Application 15/247,503, filed August 25, 2016, entitled LOCATING DEVICES, SYSTEMS, AND METHODS USING FREQUENCY SUITES FOR UTILITY DETECTION; United States Patent Application 15/250,666, filed August 29, 2016, entitled PHASE-SYNCHRONIZED BURIED OBJECT TRANSMITTER AND LOCATOR METHODS AND APPARATUS; United States Patent 9,435,907, issued September 6, 2016, entitled PHASE SYNCHRONIZED BURIED OBJECT LOCATOR APPARATUS, SYSTEMS, AND METHODS; United States Patent 9,465,129, issued October 11, 2016, entitled IMAGE-BASED MAPPING LOCATING SYSTEM; United States Patent Application 15/331,570, filed October 21, 2016, entitled KEYED CURRENT SIGNAL UTILITY LOCATING SYSTEMS AND METHODS; United States Patent Application 15/339,766, filed October 31, 2016, entitled GRADIENT ANTENNA COILS AND ARRAYS FOR USE IN LOCATING SYSTEMS; United States Patent Application 15/345,421, filed November 7, 2016, entitled OMNI-INDUCER TRANSMITTING DEVICES AND METHODS; United States Patent Application 15/360,979, filed November 23, 2016, entitled UTILITY LOCATING SYSTEMS, DEVICES, AND METHODS USING RADIO BROADCAST SIGNALS; United States Patent Application 15/376,576, filed December 12, 2016, entitled MAGNETIC SENSING BURIED OBJECT LOCATOR INCLUDING A CAMERA; United States Provisional Patent Application 62/435,681, filed December 16, 2016, entitled SYSTEMS AND METHODS FOR ELECTRONICALLY MARKING AND LOCATING BURIED UTILITY ASSETS; United States Provisional Patent Application 62/438,069, filed December 22, 2016, entitled SYSTEMS AND METHODS FOR ELECTRONICALLY MARKING, LOCATING, AND DISPLAYING BURIED UTILITY ASSETS; United States Patent Application 15/396,068, filed December 30, 2016, entitled UTILITY LOCATOR TRANSMITTER APPARATUS AND METHODS; United States Provisional Patent Application 62/444,310, filed January 9, 2017, entitled DIPOLE-TRACKED LASER DISTANCE MEASURING DEVICE; United States Patent Application 15/425,785, filed February 6, 2017, entitled METHODS AND APPARATUS FOR HIGH-SPEED DATA TRANSFER EMPLOYING SELF-SYNCHRONIZING QUADRATURE AMPLITUDE MODULATION (QAM); United States Patent Application 15/434,056, filed February 16, 2017, entitled BURIED UTILTY MARKER DEVICES, SYSTEMS, AND METHODS; United States Patent Application 15/457,149, filed March 13, 2017, entitled USER INTERFACES FOR UTILITY LOCATOR; United States Patent Application 15/457,222, filed March 13, 2017, entitled SYSTEMS AND METHODS FOR LOCATING BURIED OR HIDDEN OBJECTS USING SHEET CURRENT FLOW MODELS; United States Patent Application 15/457,897, filed March 13, 2017, entitled UTILITY LOCATORS WITH RETRACTABLE SUPPORT STRUCTURES AND APPLICATIONS THEREOF; United States Patent Application 15/470,642, filed March 27, 2017, entitled UTILITY LOCATING APPARATUS AND SYSTEMS USING MULTIPLE ANTENNA COILS; United States Patent Application 15/470,713, filed March 27, 2017, entitled UTILITY LOCATORS WITH PERSONAL COMMUNICATION DEVICE USER INTERFACES; United States Patent Application 15/483,924, filed April 10, 2017, entitled SYSTEMS AND METHODS FOR DATA TRANSFER USING SELF-SYNCHRONIZING QUADRATURE AMPLITUDE MODULATION (QAM); United States Patent Application 15/485,082, filed April 11, 2017, entitled MAGNETIC UTILITY LOCATOR DEVICES AND METHODS; United States Patent Application 15/485,125, filed April 11, 2017, entitled INDUCTIVE CLAMP DEVICES, SYSTEMS, AND METHODS; United States Patent Application 15/490,740, filed April 18, 2017, entitled NULLED-SIGNAL UTILITY LOCATING DEVICES, SYSTEMS, AND METHODS; United States Patent Application 15/497,040, filed April 25, 2017, entitled SYSTEMS AND METHODS FOR LOCATING AND/OR MAPPING BURIED UTILITIES USING VEHICLE-MOUNTED LOCATING DEVICES; United States Patent Application 15/590,964, filed May 9, 2017, entitled BORING INSPECTION SYSTEMS AND METHODS; United States Patent Application 15/623,174, filed June 14, 2017, entitled TRACKABLE DIPOLE DEVICES, METHODS, AND SYSTEMS FOR USE WITH MARKING PAINT STICKS; United States Patent Application 15/626,399, filed June 19, 2017, entitled SYSTEMS AND METHODS FOR UNIQUELY IDENTIFYING BURIED UTILITIES IN A MULTI-UTILITY ENVIRONMENT; United States Patent Application 15/633,682, filed June 26, 2017, entitled BURIED OBJECT LOCATING DEVICES AND METHODS; United States Patent Application 15/681,409, filed August 20, 2017, entitled WIRELESS BURIED PIPE AND CABLE LOCATING SYSTEMS; United States Provisional Patent Application 62/564,215, filed September 27, 2017, entitled MULTIFUNCTION BURIED UTILITY LOCATING CLIPS; United States Patent 9,798,033, issued October 24, 2017, entitled SONDE DEVICES INCLUDING A SECTIONAL FERRITE CORE; United States Provisional Patent Application 15/811,361, filed November 13, 2017, entitled OPTICAL GROUND TRACKING APPARATUS, SYSTEMS, AND METHODS; and United States Patent 9,841,503, issued December 12, 2017, entitled OPTICAL GROUND TRACKING APPARATUS, SYSTEMS, AND METHODS.

The disclosure relates to a distance measuring system comprising: a utility locator device including one or more magnetic field antennas, a processing element configured to process received magnetic field signals to determine relative position of one or more magnetic field signal sources and the locator and provide the determined relative position as locator output data and/or store the determined relative position in a non-transitory memory of the locator; a positioning element configured to determine a location of the utility locator device in three dimensional space and provide output data defining the determined location; a non-transitory memory configured to store the output data from the positioning device and the output data from the utility locator device; and a tracked distance measuring device (140), wherein the tracker distance measuring device is moveable relative to the utility locator device and comprises: a housing (202); a rangefinder element (210) for determining a distance or relative position to a point of interest (POI), and providing rangefinder output data corresponding to the determined distance or relative position to the POI; a magnetic field dipole sonde including: an alternating current (AC) signal generator including an output for providing an output AC current signal at one or more predetermined frequencies; and a magnetic field dipole antenna (208) operatively coupled to the AC signal generator output to receive the output AC current signal and radiate a corresponding magnetic field dipole signal for sensing by the utility locator device; and; an actuator mechanism (204) operatively coupled to the rangefinder element and the magnetic field dipole sonde for: triggering one or more distance determinations; and triggering generation of the magnetic field dipole signal in conjunction with the triggering a distance determination, wherein the tracker distance measuring device is configured to determine the dimensions or geometry of the POI based on the one or more distance determinations; wherein the utility locator device is configured to: receive a magnetic field dipole signal from the tracked distance measurement device; and determine relative positional data comprising the location and pose of the tracked distance measuring device relative to the utility locator device, by: determining field measurements at each magnetic field antenna from the received magnetic dipole signal; determining an approximate signal origin location, Sp; determining a predicted signal orientation and power, Bm, at the approximate signal origin location, Sp; determining expected field measurements, Cs, based on an approximate signal origin location source having a predicted orientation and/or pose and power, Bm, given the known configuration of the magnetic field antenna coils; calculating an error metric, Err, wherein Err = |Ms-Cs|; and iteratively varying the approximate signal origin location, Sp, and providing a corresponding update to the expected field measurements, Cs, until a minimum Err is determined.

A method of measuring distance with a distance measuring system comprising a utility locator device (110) including: one or more magnetic field antennas, a processing element configured to process received magnetic field signals to determine relative position of one or more magnetic field signal sources and the locator and provide the determined relative position as locator output data and/or store the determined relative position in a non-transitory memory of the locator; a positioning element configured to determine a location of the utility locator device in three dimensional space and provide output data defining the determined location; a non-transitory memory configured to store the output data from the positioning device and the output data from the utility locator device; and a tracked distance measuring device (140), wherein the tracker distance measuring device is moveable relative to the utility locator device and comprises: a housing (202); a rangefinder element (210) for determining a distance or relative position to a point of interest (POI), and providing rangefinder output data corresponding to the determined distance or relative position to the POI; a magnetic field dipole sonde including: an alternating current (AC) signal generator including an output for providing an output AC current signal at one or more predetermined frequencies; and a magnetic field dipole antenna (208) operatively coupled to the AC signal generator output to receive the output AC current signal and radiate a corresponding magnetic field dipole signal for sensing by the utility locator device; and; an actuator mechanism (204) operatively coupled to the rangefinder element and the magnetic field dipole sonde for: triggering one or more distance determinations; and triggering generation of the magnetic field dipole signal in conjunction with the triggering a distance determination; the method comprising: responsive to a user input, triggering by the actuator the tracked distance measuring device to initiate in conjunction: a plurality of measurements of distance from the rangefinder element to a point of interest (POI) (304); transmission of a dipole magnetic field signal from the magnetic field dipole sonde element antenna; receiving (306), by the utility locator, the transmitted dipole magnetic field signal from the tracked distance measurement device; determining relative positional data comprising the location and pose of the tracked distance measuring device relative to the utility locator device (308) by: determining field measurements at each magnetic field antenna from the received magnetic dipole signal; determining an approximate signal origin location, Sp; determining a predicted signal orientation and power, Bm, at the approximate signal origin location, Sp; determining expected field measurements, Cs, based on an approximate signal origin location source having a predicted orientation and/or pose and power, Bm, given the known configuration of the magnetic field antenna coils; calculating an error metric, Err, wherein Err = |Ms-Cs|; and iteratively varying the approximate signal origin location, Sp, and providing a corresponding update to the expected field measurements, Cs, until a minimum Err is determined; providing, from the tracked distance measurement device, the distance measurement from the rangefinder element to the point of interest (POI) as tracked distance measurement output data (310); determining absolute positional data at the locator using the positioning element and providing the absolute positional data as an output (312); using the one or more measurements to determine the POI's dimensions or geometry; processing the absolute positional data, the tracked distance measurement data, and relative positional data in conjunction to determine absolute positional data associated with the POI (314).

In the embodiment of the invention, a tracked distance measuring device includes a body element housing a rangefinder element to measure the distance to a point of interest (POI) as well as a position element to determine the position of the tracked distance measuring device in three dimensional space as well as pose of the tracked distance measuring device at that location. An actuator isincluded allowing a user to initiate measurement to a POI that may simultaneously correlate to the position of the tracked distance measuring device. The term "position," as used herein, refers to a location within three dimensional space in a relative or absolute coordinate system and/or as a pose that describes the direction and tilt at that location. The POI is mapped based on the position data of the tracked distance measuring device and distance data determined therefrom. In some implementations, the POI may be outlined or traced by the tracked distance measuring device such that the outline of the POI may be mapped. Processing elements and data logging elements may further be included within the central body element or in a locator or other associated device to process and store data, which may include mapping information of POIs.

The rangefinder element may be a laser rangefinder utilizing a laser beam to determine distance to a POI. In some embodiments, the rangefinder elements may instead be or include other types of rangefinders (*e.g*., radar, sonar, LiDAR, ultrasonic, and the like).

The rangefinder element may further be or include an optical ground tracking device, such as described in the cited applications, to determine position via optically tracking movements as it is moved about the Earth's surface. The optical ground tracking device may further include a laser in a known orientation to the camera or cameras on the optical ground tracking device used to direct the camera or cameras towards a POI as well as be used in a method for determining the precise location of the POI. Cameras within the optical ground tracking device my generate images associated with the POI for mapping it's location as well as identifying the POI. The optical ground tracking device may be positioned in a known or reference orientation relative to a utility locator device allowing the POI range data generated by the optical ground tracking device to be communicated to and be tracked by the utility locator device. In embodiments wherein the optical ground tracking device is equipped with two or more cameras collecting stereoscopic images of a single POI, three dimensional modeling of a POI may be achieved. The three dimensional modeled POI may be added to a map or mapping system covering the locate area.

The position element includes a dipole signal transmitter and associated magnetic antenna for generating and transmitting dipole magnetic field signals for detection by a corresponding signal tracking device. Within utility locating and mapping system embodiments, the signal tracking device is a magnetic field sensing utility locator device (also known as a buried object locator or just "locator" for brevity) as further described in the cited patents and patent applications listed previously herein. The utility locator device may receive the transmitted signal or signals and determine and map information about the position including pose of each signal and thereby, information about the location of each POI. The positioning element of the embodiments may further be or include Global Positioning System (GPS) and/or other global navigation satellite systems as well as gyroscopic and other inertial sensors. In some tracked distance embodiments, the positioning element may also include arrays of GPS receivers and/or RTK GPS systems.

The body element may also include various other sensors and other components. Such sensors and components may include, but are not limited to, Bluetooth radios/transceivers, Wi-Fi radios/transceivers, and/or other wireless communication devices, imaging sensors, audio sensors and recorders, gyroscopic sensors, accelerometers, other inertial sensors, and/or global positioning satellite (GPS) sensors or other satellite navigation sensors. The central body element may further include a power module containing batteries or other powering components for providing electrical power to the signal transmitter and/or other components of the tracked measuring device.

Within utility locating and mapping system embodiments, the signal tracking device may be a utility locator device as described in the cited patents and patent applications listed previously herein. The utility locator device may receive the transmitted signal or signals and determine and map information about the position including pose of each signal and thereby, information about the location of each POI. Gyroscopic and other inertial sensors may further be included within the position elements of a tracked distance measuring device.

In the embodiments of the invention, the utility locator device of systems and methods herein receives the signal or signals from a tracked distance measuring device while simultaneously receiving signals from other sources such as, but not limited to, buried utility lines, pipe Sondes (magnetic field dipole signal generators), and other system devices and determine the position of each signal. The utility locator device is equipped with a dodecahedral or equivalent or similar antenna array and associated components capable of tensor gradient measurements of received magnetic field signals, such as described in the cited applications.

Embodiments of the invention also relate to methods for determining the position or positions, which include location and pose, of signals received at a utility locator from a tracked measuring device.

In another aspect, the present disclosure may include one or more input elements. The input element of some embodiments may include methods and devices for taking audio notes created by a user and further correlating such audio notes with the POI, mark location, and/or other signal data. Speech-to-text (STT) type or similar translating methods may be used to translate audio files and create virtual POIs that may further be used in map systems containing utility information.

In another aspect, digital image recognition algorithms or similar, artificial intelligence techniques, simultaneous localization and mapping (SLAM), or equivalent methods may be used to recognize and generate corresponding POI metadata from generated POI images.

In another aspect, the tracked distance measuring devices herein may include one or more imaging sensors for generating still or video images of POIs. In some embodiments, the tracked distance measuring device may include a graphical user interface for displaying images and allowing the tracked distance measuring device to be aimed appropriately at a POI. Images may be stored on the tracked distance measuring device and/or communicated and stored on one or more other system devices (*e.g.,* a utility locator, tablet, smart phone, other computing device, or the like). The stored images may further be included in mapping systems of the work area. Image recognition techniques, artificial intelligence techniques, simultaneous localization and mapping (SLAM), or like techniques may be employed to identify POIs from images taken within the locating system or other mapping system.

In another aspect, in some stand-alone tracked distance measuring device examples, the position of the device correlating to a POI may be determined and stored within the tracked distance measuring device. Internal global navigation satellite sensors and/or other position and orientation sensors may be configured to determine the device's location and store the location correlating to the POI distance data.

In another aspect, the rangefinder element of some tracked distance measuring devices may be modular or otherwise user removable from tracked distance measuring device. For instance, the rangefinder element may be a commercial available distance meter device such as the Leica DISTO^{™} line of laser distance meters that may attach to the tracked distance measuring device.

In another aspect, the rangefinder element may include an optical ground tracking device such as described in the cited applications.

In another aspect, methods for determining dipole signal location and POI location are described.

### Examples and Embodiments

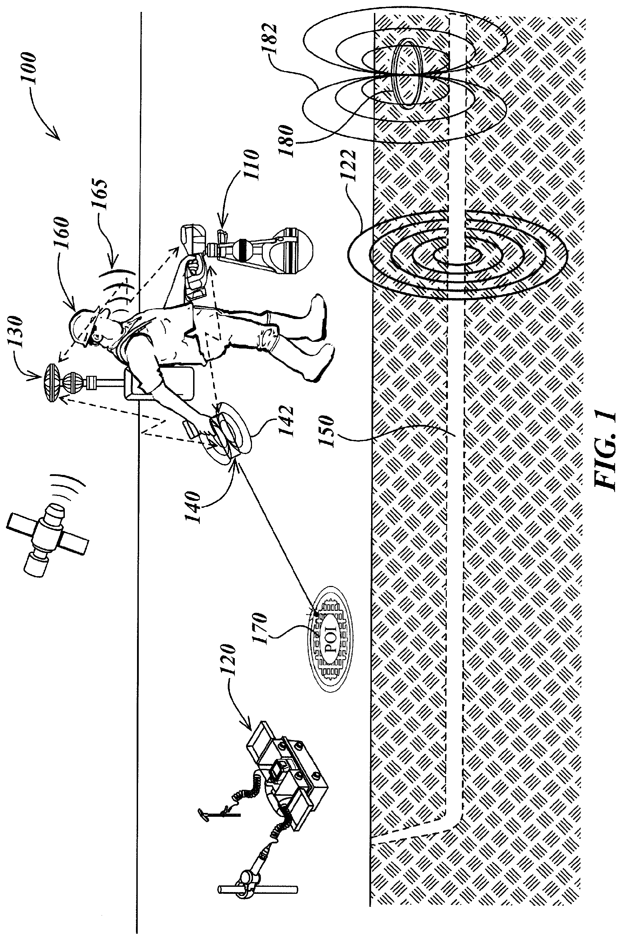

Various additional aspects, features, and functions are described below in conjunction with the embodiments shown in FIG. 1 through FIG. 15 of the appended Drawings.

It is noted that as used herein, the term, "exemplary" means "serving as an example, instance, or illustration." Any aspect, detail, function, implementation, and/or embodiment described herein as "exemplary" is not necessarily to be construed as preferred or advantageous over other aspects and/or embodiments unless specifically described as such.

Turning to FIG. 1, a utility locating and POI identification system embodiment 100 includes a utility locator device 110, a locating system transmitter device 120, a GPS backpack device 130, and a tracked distance measuring device 140. The utility locator 110 receives one or more electromagnetic signals, such as signal 122 emitted from utility 150 (based on AC current flow in the utility 150), and processes the received magnetic field signal component of the electromagnetic signal to determine utility position and/or depth below the ground surface (e.g., as described in the cited applications). The locator 110 may also receive signal 182 emitted from an electronic marking device 180, such as those described in the cited marking device applications (e.g., "UFID" devices or other RFID type devices) and process that signal as described in the cited marker device applications to likewise determine location information.

Signal 122 emitted from utility 150 may result from AC current provided to utility 150 from transmitter 120, which may be coupled to utility 150 via direct conductive contact or inductively or capacitively. Signal 182 may be sent by electronic marking device 180 in response to an excitation signal (*e.g.,* as or similar to an RFID device) that may be generated from the locator, with the reply signal then received by the utility locator device 110 to determine the location of the electronic marking device 180 as well as orientation, tilt, pose, and depth within the ground.

In some embodiments, the electronic marking device 180 may communicate information (*e.g*., information regarding the utility line 150 or other buried asset or the like, rather than just a CW signal) to the utility locator device 110 via a signal 182 (*e.g.,* using amplitude shift keying, phase shift keying, frequency shift keying, or other encoding technique of signal 182). Marking device 180 may be of the type described in cited marking device applications such as United States Patent 9,746,572, issued August 29, 2017, entitled ELECTRONIC MARKER DEVICES AND SYSTEMS and United States Patent Application 15/434,056, filed February 16, 2016, entitled BURIED UTILITY MARKER DEVICES, SYSTEMS, AND METHODS.

In some embodiments, a distance measurement system may include a utility locator device with hardware and software configured to receive and process passive signals caused by, for example, current flow induced in the utility from broadcast signals such as AM broadcast radio transmissions, other radio frequency transmissions, other ambient signals, and/or active signals caused by currents intentionally induced onto the line through the use of a transmitter device or induction stick device (*e.g*., signal 122 emitted from transmitter 120) or lines that otherwise have inherent current flow therein, such as from nearby conductors carrying current. Examples of embodiments of locators with passive broadcast signal processing hardware and disclosed in, for example, cited United States Patent Application 15/360,979, filed November 23, 2016, entitled UTILITY LOCATING SYSTEMS, DEVICES, AND METHODS USING RADIO BROADCAST SIGNALS.

An absolute or reference location of the utility locator device 110 may be determined or refined using a satellite system receiver (e.g., a GPS, GLONASS, or other receiver) as a positioning element and/or or may be determined with a GPS backpack device 130, which provides precision GPS positional data using a high precision GPS receiver, or other high precision device, and in conjunction provides a sonde signal detectable by a locator to determine the relative position/distance between the locator and sonde. Example GPS backpack devices are described in, for example, cited U.S. Patent Application Serial No. 13/851,951 and Serial No. 14/332,268. Other devices or systems for receiving positioning signals and processing them as known or developed in the art to determine a reference position (e.g., in latitude /longitude or other reference coordinates) may also used, either alone or in combination.

In some system embodiments, GPS and/or other positioning receivers or other sensor devices may be incorporated in a utility locator device, a tracked distance measuring device, and/or other connected system devices, and such systems do not require a GPS backpack device such as the GPS backpack device 130 of FIG. 1; however, use of such a device may improve positional accuracy.

Still referring to FIG. 1, user 160 may identify one or more points of interest (POIs) within the locate area. For example, POI 170 may be a metal manhole cover, and the metal of the manhole may affect magnetic fields in its proximity. A utility locating system, upon identifying and locating the presence of a POI with such a signal effect, may be configured to automatically compensate for this effect and allow for increased accuracy in identifying and mapping utility locations by adjusting for the magnetic field anomaly. In other uses, determination and storage of POI type, location, and/or other data may be desirable for mapping or other purposes besides signal distortion correction.

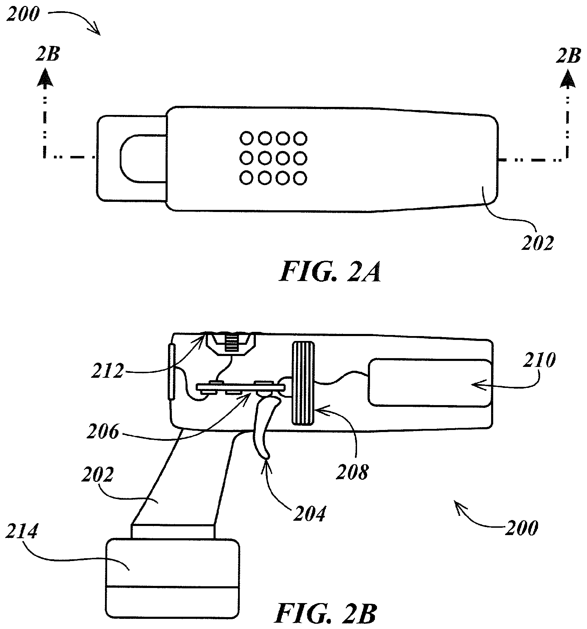

Tracked distance measuring device 140 includes a magnetic field dipole device (commonly referred to in the art as a "sonde," which includes an AC current signal source and a dipole antenna, with an optional battery and/or other elements such as described in the cited sonde applications), and the sonde is actuated or triggered to generate and send an AC magnetic field dipole signal, such as magnetic dipole signal 142 as shown in FIG. 1, in conjunction with measuring the distance to POI 170 (e.g., a laser distance determination of using other rangefinder distance determination methods). For example, a trigger, switch, lever, pushbutton, or other actuation mechanism may be included on or within a tracked distance measuring device (*e.g*., actuator mechanism 204 on tracked distance measuring device 200 illustrated in FIG. 2A and 2B) for actuating the synchronization of signal transmission and distance measuring actions.

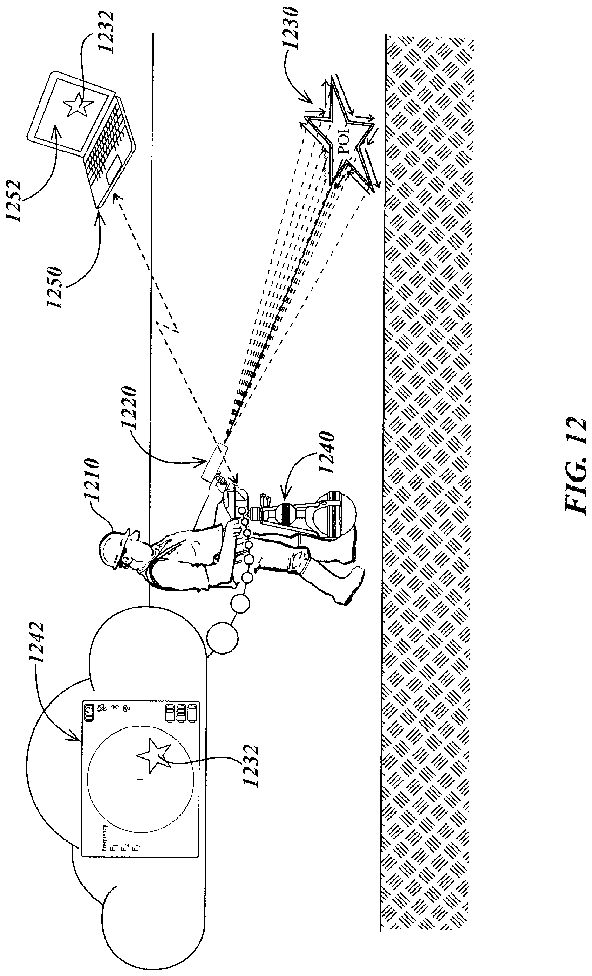

FIGs. 2A and 2B illustrate details of tracked distance measuring device embodiment 200. The tracked distance measuring device 200 may be or share aspects with the tracked distance measuring device 140 or other tracked distance measuring devices described herein. As illustrated in FIG. 2B, the tracked distance measuring device 200 includes a housing 202 and a trigger or actuator mechanism 204, which may be positioned externally. In other embodiments, other types of user input mechanisms (*e.g*., pushbutton controls, switches, levers, touch screens or buttons, etc.) may be used to allow user actuation. The actuator 204 may be triggered in a single action or in a continuous tracing mode (as described subsequently with respect to FIG. 12) if held in a depressed position.

As further illustrated in FIG. 2B, the actuator 204 may pass into an internal cavity within the housing 202 such that the actuator 204 communicates with PCB 206, such as via electrical connections, mechanical connections, or other mechanisms to trigger generation of a magnetic field dipole signal to be emitted via antenna 208, as well as to trigger a distance measurement to a POI via rangefinder element 210.

The rangefinder element 210 may, for example, be a laser distance measurement rangefinder or other optical rangefinder, an acoustic rangefinder, or other distance measuring devices as known or developed in the art. For example, in alternate embodiments, the rangefinder element may be or include other types of rangefinders (*e.g*., radar, sonar, LiDAR, ultrasonic, or the like). The PCB 206 may contain a processing element using a processor or processors and associated memory that is programmed to generate, receive, and process various signals (*e.g*., dipole signal for tracking, data signals from sensors and mechanisms and/or other system devices, and the like) as well as user input signals recorded via an audio input device such as microphone 212.

The tracked distance measuring device embodiment 200 may further include an electrical power source such as a battery 214. PCB 206 may further include various other sensors and modules such as gyroscopic sensors, other inertial navigation sensors, radio transceiver modules for communicating with various system devices (*e.g*., Bluetooth, WIFI, or other wireless communications transceivers), cellular data transceivers, and the like. In some embodiments, a tracked distance measuring device may include other sensors and modules including, but not limited to, GPS or other satellite and/or land based navigation system receivers and associated antennas, cameras and imaging sensors, audio microphones and recorders, as well as graphical user interfaces to provide visual data displays to a user, such as on LCD or other panel or screen types.

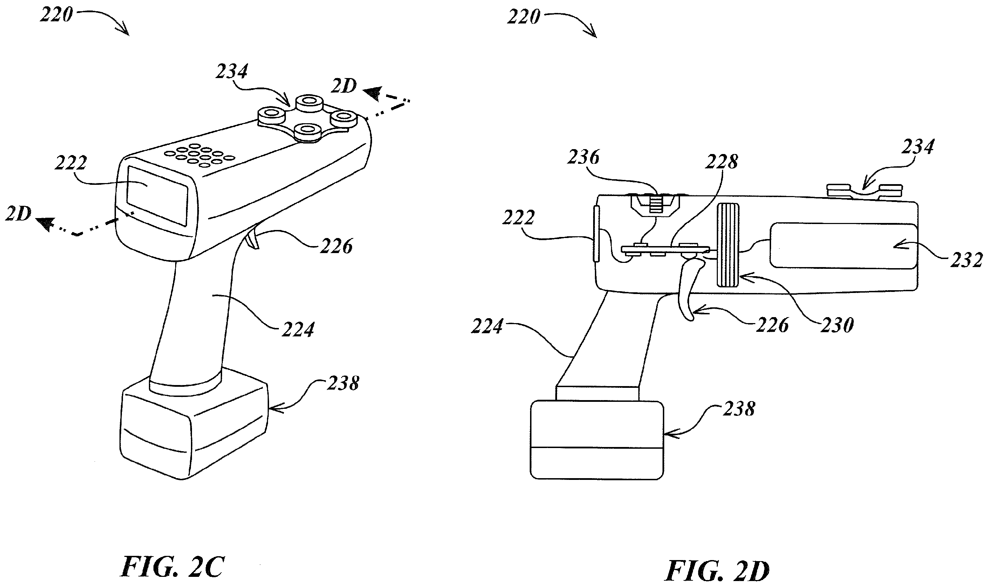

For example, tracked distance measuring device embodiment 220 of FIG. 2C may include a graphical user interface 222 on which information may be displayed to a user. The tracked distance measuring device 220 includes a housing 224 and an actuator/trigger mechanism 226. The actuator mechanism 226 allows a user to actuate operation of the tracked distance measuring device 220. As further illustrated in FIG. 2D, the actuator mechanism 226 may pass into an internal cavity within the housing 224 such that the actuator mechanism 226 communicates with PCB 228 to generate a dipole signal emitted via antenna 230, as well as initiating a correlating distance measurement via rangefinder element 232 which, in an exemplary embodiment, is a laser distance measurement rangefinder that determines distance to a particular target (e.g., a POI), by sending a laser pulse or other signal and measures the time of travel (or otherwise sends, receives, and processes light to determine a precise distance between a reference point on the tracked distance measuring device and the target/POI). As noted before, rangefinders different than laser-based may also be used in alternate embodiments.

The tracked distance measuring device embodiment 220 may include or be operatively coupled to a positioning system antenna and corresponding receiver 234 having one or more antennas and associated circuitry for receiving GPS, GLONASS, or other global navigation system or other positioning system signals. Positioning data from the devices may be used with distance measuring device 220 and location of POIs in further processing and data association/mapping. For example, in addition to position, the orientation, tilt, and pose of the tracked distance measuring device 220 may be determined from the GPS.

Orientation, tilt, and pose of the tracked distance measuring device 220 may further be determined or refined via gyroscopic or other inertial sensors on PCB 228 or on other electronic circuitry (not shown). For example, PCB 228 may include a processing element using a processor or processors and associated memory that may be used to generate, receive, and process signals (*e.g*., dipole signal for tracking, data signals from sensors and mechanisms and/or other system devices, and the like) as well as user input signals recorded via microphone 236.

The tracked distance measuring device 220 may further include a portable electrical power source such as battery 238. Battery 238 may be a smart or "intelligent" battery as described in cited United States Patent Application 13/532,721, filed June 25, 2012, entitled MODULAR BATTERY PACK APPARATUS, SYSTEMS, AND METHODS and United States Patent Application 13/925,636, filed June 24, 2013, entitled MODULAR BATTERY PACK APPARATUS, SYSTEMS, AND METHODS INCLUDING VIRAL DATA AND/OR CODE TRANSFER.

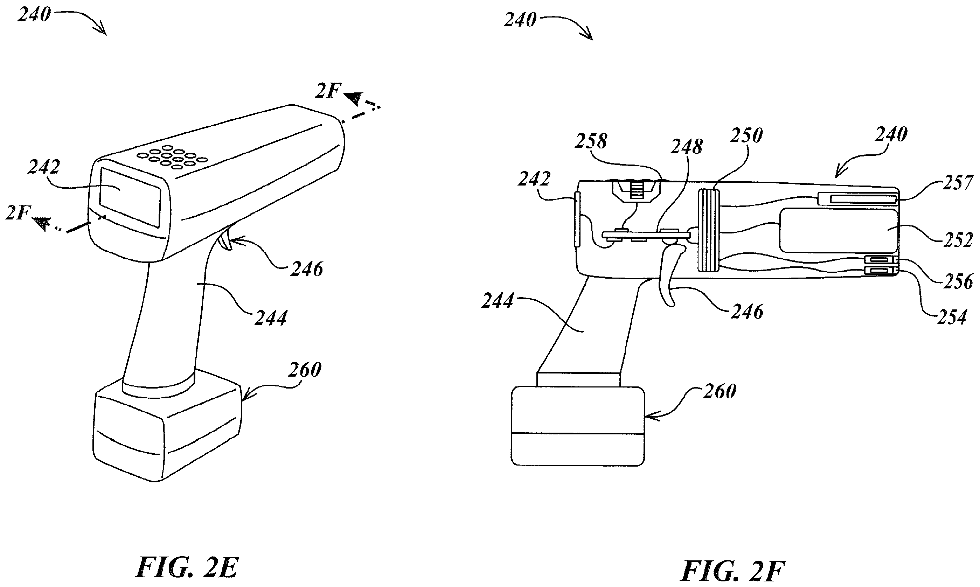

Turning to FIG. 2E, tracked distance measuring device embodiment 240 may include a graphical user interface 242, such as a flat screen panel (which may be positioned externally on or within a housing), a housing 244, which may be gun-shaped as shown, and an actuator/trigger mechanism 246 disposed on and/or within the housing. The actuator 246 allows a user to actuate tracked distance measuring device 240 such as described previously herein. As further illustrated in FIG. 2F, the actuator 246 may extend into an internal cavity within the housing 244 as shown, and may otherwise communicate actuation to PCB 248 such that the actuator 246 provides communication to PCB 248 to initiate generation of a dipole signal emitted via antenna 250, as well as to initiate a correlating distance measurement via rangefinder element 252, which may be a laser rangefinder as described previously herein, or another type of rangefinder in alternate embodiments.

Tracked distance measuring device 240 may include one or more cameras or imaging sensors and associated optics and electronics, such as the telephoto camera 254 or wide angle camera 256. In embodiment 240, the cameras 254 and 256 may take still images or video of a targeted POI and/or the surrounding environment. Such images may be stored in a non-transitory memory, displayed on graphical user interface 242, and/or communicated to a separate communicatively connected system device for display, storage, or further processing.

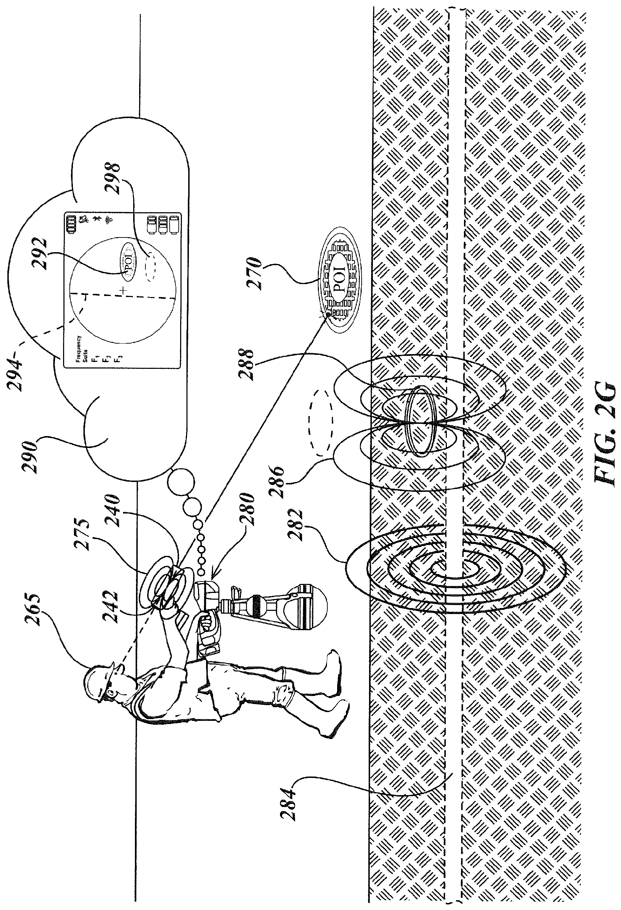

Images may also be stored in a memory or database, and correlated with received and processed dipole magnetic field signals and distance to POI data. Display of imagery from cameras 254 and/or 256 on graphical user interface 242 may be done to allow a user to effectively aim the tracked distance measuring device 240 at a POI (*e.g.,* POI 270 of FIG. 2G). Imagery collected may, for example, using artificial intelligence signal processing, simultaneous localization and mapping (SLAM) processing, and/or image recognition image processing, be used to identify the POI and create and map the POI (POI data/records may also include metadata identifying the POI type or other characteristics or associated information).

Tracked distance measuring device 240 may include a laser 257, which may be a green laser or other color or other daylight visible laser, to emit a laser beam in a desired direction and allow or aid a user in aiming the tracked distance measuring device 240. The PCB 248 may include a processing element with a processor or processors and associated non-transitory memory that may be used to generate, receive, and process signals (*e.g*., dipole signal for tracking, POI imagery, data signals from sensors and mechanisms and/or other system devices, and the like) as well as user input signals recorded via microphone 258.

The tracked distance measuring device 240 may further include an electrical power source, such as battery 260. Battery 260 may be an intelligent battery as described in cited United States Patent Application 13/532,721, filed June 25, 2012, entitled MODULAR BATTERY PACK APPARATUS, SYSTEMS, AND METHODS and United States Patent Application 13/925,636, filed June 24, 2013, entitled MODULAR BATTERY PACK APPARATUS, SYSTEMS, AND METHODS INCLUDING VIRAL DATA AND/OR CODE TRANSFER.

FIG. 2G illustrates an example use of a tracked measurement system device. As shown in FIG. 2G, tracked distance measuring device embodiment 240 may be held by a user 265 such that the user looks at the GUI 242 to aim device 240 towards a POI 270, in a way similar to pointing a gun at a target (i.e., the POI). The vertical orientation of the graphical user interface 242 and forward facing cameras 254 and 256 (as shown in FIG. 2F) may be configured on the housing to allow a straight line of sight towards POI 270. Likewise, laser 257 (as shown in FIG. 2F) may be directed towards POI 270 to assist in aiming the tracked distance measuring device 240. When actuated, the tracked distance measuring device 240 generates and sends a dipole magnetic signal 275. Magnetic field signal 275 is then received and processed at utility locator 280, such as using signal processing as described in the cited applications, to determine position (location and pose) and mapping of the POI 270.

In addition to the magnetic field signal 275, utility locator 280 may simultaneously receive signals from other signal sources. For example, utility locator 280 may receive signal 282 emitted by utility line 284 and signal 286 emitted from electronic marking device 288 (marking device 288 is typically excited by an external source to operate in an RFID-like functionality by scavenging electromagnetic energy to send a reply signal which may optionally include encoded data).

The location, orientation, tilt, pose, and depth within the ground of utility line 284 and electronic marking device 288 from the respective signals 282 and 286 may be stored in a non-transitory memory, may be associated so as to link them as part of a common measurement, may be displayed upon a graphical user interface 290 of the utility locator 280, and/or may be communicated as data to other electronic computing devices, system devices, and/or remote mapping systems. As illustrated in FIG. 2G, graphical user interface 290 may display a POI indication 292, which may correspond to the mapped location of POI 270, a line 294 corresponding to the mapped location of utility line 284, and/or a marker indication 298 corresponding to the mapped location of electronic marking device 288. Other displays using some or all of this information, and/or other data or information, may be presented to a user and/or stored, displayed, and/or processed remotely in a memory or database.

In some embodiments data processing, including position and mapping data, may be done in real time or near real time in the utility locator device, other signal receiving device, the tracked distance measuring device, and/or another connected electronic computing device or other devices. For example, distance measurements generated via a tracked distance measuring device such as described herein may be communicated as data to the utility locator device, other signal receiving device, or other computing device for processing of data and mapping POI location.

In some embodiments, such communication of data may be implemented by modulating the dipole tracking signal emitted by the tracked distance measuring device (*e.g*., amplitude shift keying, frequency shift keying, phase shift keying, or the like) in an electronic circuit. In other embodiments, Bluetooth, Wi-Fi, or other wireless data connections may be established between system devices or other computing devices (*e.g*., smart phones, tablets, notebook computers, and the like) to process data and determine and map POI locations. In other embodiments, data may be stored within the tracked distance measuring device, utility locator device, or other system device for post processing of data and mapping POIs.

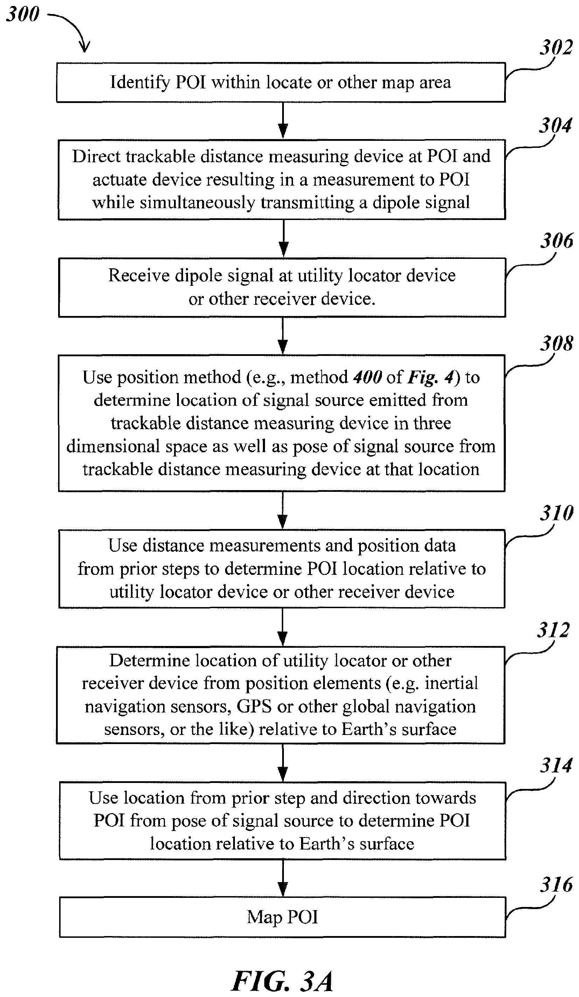

FIG. 3A illustrates details of a method/process embodiment 300 for determining the location and mapping of a POI. In step 302, a user may identify a POI within the locate area or other area being mapped or sensed, such as by visual sighting, reference to an image or printed map, or via other identification methods. In step 304, a tracked distance measuring device may be directed at the POI and actuated such as described previously herein. Upon actuation, the tracked distance measuring device generates a distance measurement to the POI, for example with a laser rangefinder, while simultaneously generating a magnetic field dipole signal which may be CW or may be modulated with data.

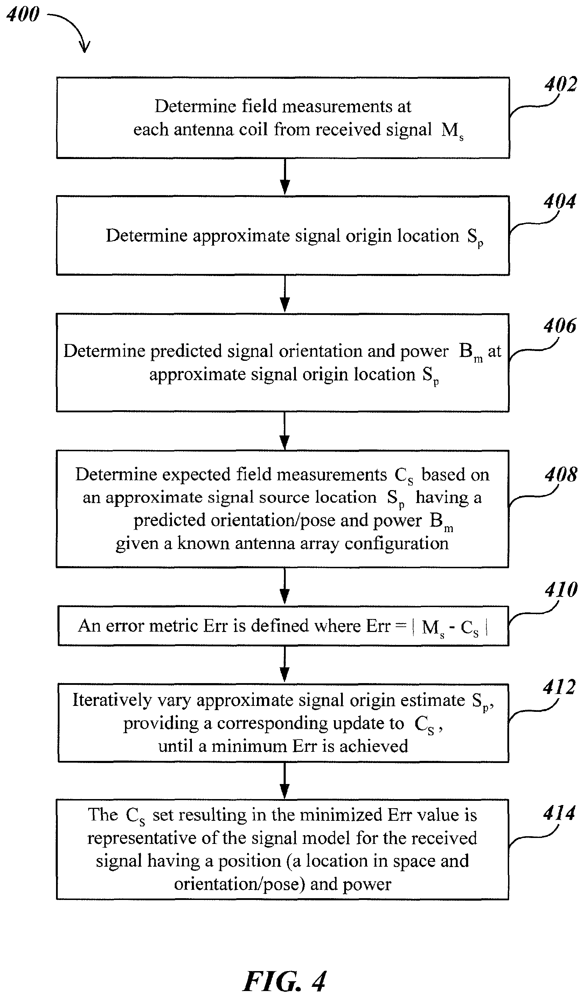

In step 306, the dipole signal is received at an associated utility locator or other signal sensing/tracking device. In step 308, the position of the signal source emitted from the tracked distance measuring device is determined. This position data includes a location and pose in three-dimensional space relative to the utility locator or other signal tracking device. In the embodiments of the invention, step 308 utilizes a method such as method 400 of FIG. 4 (described subsequently herein), or, in examples, other similar signal position determination methods.

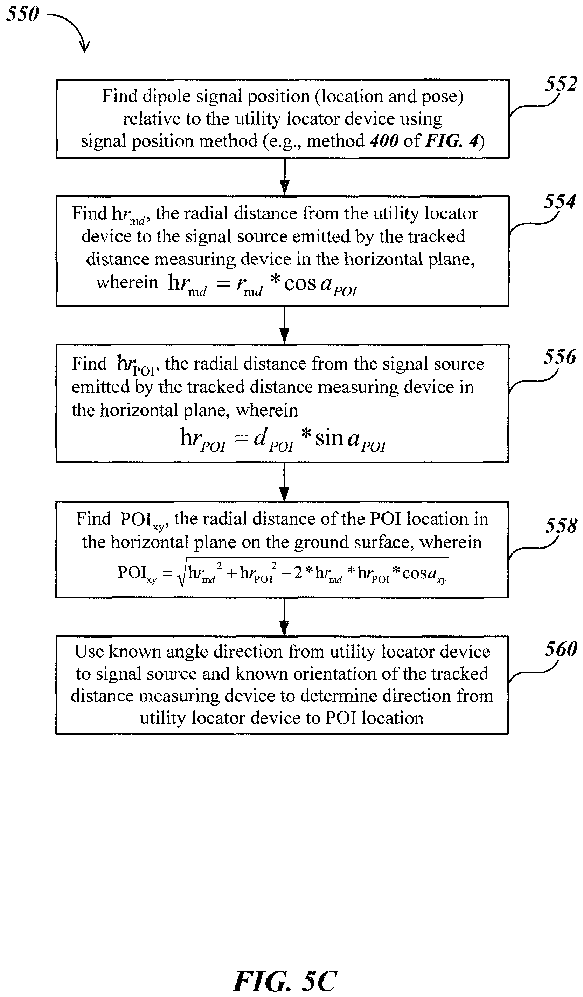

In step 310, the distance measurement data to the POI and position data of the tracked distance measurement device is used to determine POI location relative to the utility locator or other signal tracking device based on geometrically processing the data. This step 310 may utilize a method such as method 550 of FIG. 5C (described subsequently herein). In step 312, the location of the utility locator device or other signal sensing/tracking devices relative to the Earth's surface may be determined from position determining systems (*e.g*., GPS or other global navigation receivers, inertial navigation sensors, terrestrial receivers, or other position determining devices that determine position relative to the Earth's surface). In step 314, the location of the POI relative to the Earth's surface may be determined by processing the data. In step 316, the POI may be included in a map or map system, such as by incorporated it into map data or associated the position with other map data or information, either locally or remotely.

In some embodiments, user input may be provided to identify or add notes associated with or correlating to the POIs. For instance, using a microphone and associated audio recording electronics, a spoken description of a POI may be provided by the user at the tracked distance measuring device, utility locator device, or other system device, and stored in memory on a file or other data structure. This annotation data may be associated with other collected data as described herein, such as linking records in a database or using other data association methods.

Computer Speech Recognition (CSR) or Speech to Text (STT) processing and associated hardware may be included as separate elements or implemented in shared functionality processing elements. CSR and/or STT may be used transcribe spoken notes and provide metadata during locate or other field operations to provide a virtual POI within a map system. For example, as illustrated in FIG. 1, a user 160 may create an audio note 165, which may data stored in non-transitory memory in a file format such as standard audio files like MP3 or other audio file format. The audio note 165, corresponding to the illustrate manhole POI, may be the English language (or other language) word "manhole cover" or other description of POI 170 (other POIs would typically have a file with a description or other identifier corresponding to the POI type or other POI characteristics).

The tracked distance measuring device 140, utility locator device 110, and/or other system devices may include audio recording hardware and software to receive and record the audio note 165, and may also associated the audio note 165 with POI 170 using, for example, a data linkage structure or other data association mechanism as used in databases or other linked data systems. The utility locating system 100 may further implement in hardware and/or software Computer Speech Recognition (CSR), Speech to Text (STT), or other signal processing methods to transcribe and generate metadata such that system 100 may recognize that POI 170 is a manhole cover (or other POI type). Pushbuttons or other input methods and associated hardware and software apparatus may be include on a tracked distance measuring device, utility locator device, or other system device allowing a user to directly input POI metadata and/or other data associated with the POI and/or associated operations (e.g., a utility locate operation, field survey operation, etc.).

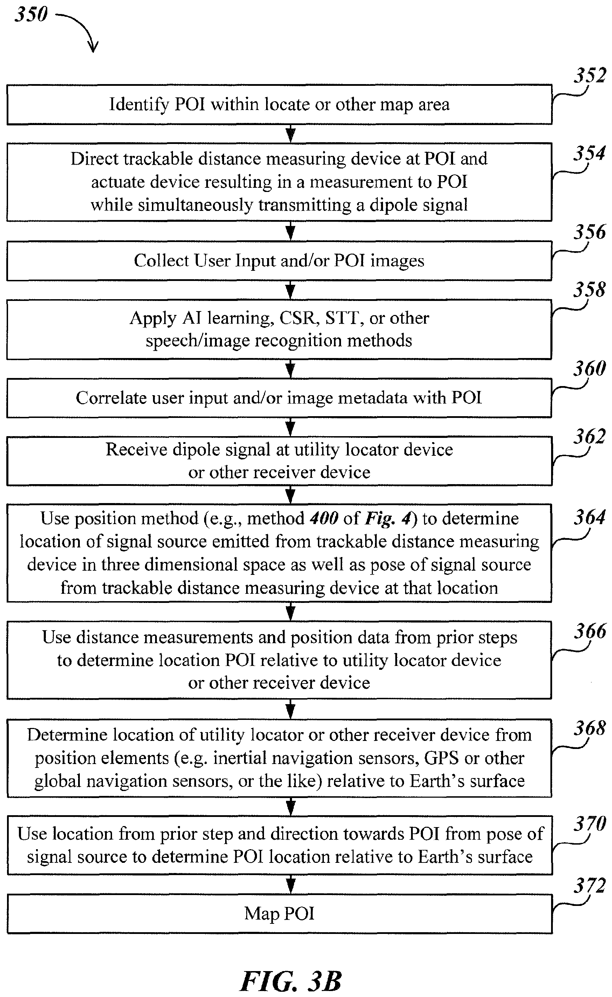

Methods for determining the location of and mapping a POI may include such user input POI metadata in subsequent data processing. For example, a method such method embodiment 350 illustrated in FIG. 3B may be used. Method 350 may start at step 352, wherein a user identifies a POI within the locate or other map are, such as through visual sighting, field surveying or map data collection based on hard copy maps or images, use of predefined coordinates, and the like).

In step 354, a tracked distance measuring device is directed at the POI and actuated, such as by pointing the device as described previously herein. Upon actuation, the tracked distance measuring device determines a distance measurement to the POI, which may be in one or more orthogonal coordinate systems (*e.g*., as a scalar distance or vector distance data) while simultaneously, or in conjunction with the aiming and trigger actuation, generate a magnetic field dipole signal for detection by an associated utility locator. In step 356 user input and/or POI images may be received/captured. The user input may include, for example, pushbutton input, spoken audio notes, images generated by cameras or other imaging sensors within some tracked distance measuring devices or through separate cameras and/or other user generated input received and recorded by the tracked distance measuring device 140, utility locator device 110, and/or by or from other system devices.

In optional step 358, CSR, STT, artificial intelligence (AI) and/or other speech recognition signal processing algorithms may be applied to transcribe/determine meaning associated with the user input (e.g., to speech-recognize that the user stated "manhole cover" in the example of FIG. 1 and covert this to text or another digital format).

In step 360, the user input and/or images of POI may be correlated/associated with the POI such as through data linkage or other association data association methods known or developed in the art. In step 362, the magnetic dipole signal may be received at a utility locator or other magnetic field signal detection/tracking device. In step 364, the position of the signal source emitted from the tracked distance measuring device is determined, for example, using locator detection and signal processing techniques as described in the cited applications and/or as known or developed in the art, which includes determining data defining a location and pose in three dimensional space relative to the utility locator or other signal tracking device, thereby providing a vector representing the relative position between the tracked distance measurement device and the locator.

At step 364, a method such as method embodiment 400 of FIG. 4 or other similar or equivalent exemplary signal position determining methods. In step 366, the distance measurement data to the POI and position data of the tracked distance measurement device determined in prior steps is used to determine POI location relative to the utility locator or other signal tracking device, which may be in one or more dimensional space (e.g., as a scalar or vector value, typically a vector in three dimensions, but alternately a scalar magnitude and directional angle, or as distance data in another coordinate system). Step 366 may implement a method such as method embodiment 550 described in FIG. 5C.

Returning to FIG. 3B, in step 368, the location of the utility locator device (or other signal detection/tracking device) relative to the Earth's surface may be determined from positioning elements. For example, inertial navigation sensors, GPS or other global navigation systems receivers, or other position determination devices and methods (e.g., terrestrial navigation systems, etc.) may be used to determine the locator's (or other signal detection/tracking device, or mapping device) position in absolute coordinates, such as latitude longitude or other reference coordinates. In step 370, the location of the POI relative to the Earth's surface may be determined in absolute coordinates (e.g., latitude/longitude or other reference coordinates) by combining the relative position or distance data between the locator (or other signal detection/tracking device, or mapping device) with the absolute position data determined from the positioning element/elements (e.g., GPS or other satellite receiver, inertial sensor and initial reference, etc.) . In step 372, the POI may be included in a map or map system as a data point or record, and may be associated with other data as described herein, either locally or in a remote database system.

Referring back to FIG. 1, in the operation of the embodiments of the invention illustrated therein, the dipole magnetic field signal 142 emitted by tracked distance measuring device 140 is received at a utility locator device, such as at magnetic field antennas or antenna arrays (not shown in FIG. 1) of utility locator device 110, and is then processed in electronic circuitry in the utility locator device, such as is known or developed in the art and/or as described in examples in the cited applications, to determine relative positional data. The relative positional data which may include location and pose of the tracked distance measuring device 140 in three dimensional space. In the embodiments of the invention, method 400 of FIG. 4 is implemented using a dipole magnetic field signal 142 received at utility locator device 110 to determine location, orientation, and pose of tracked distance measuring device 140 relative to the locator (or other signal sensing/tracking device). The utility locator and/or other computing device may further include hardware and software to determine and map POI location based on distance data and position data.

If the tracked distance measuring device 140 is moved during use and electromagnetic dipole signals 142 are sent during movement, the utility locator device 110 may be programmed to track and store the tracked distance measuring device 140's position, movements, and/or orientations over time, such as by taking a series of data points as the tracked distance measurement device is moved about a locate site. The resulting data may be stored in a non-transitory memory in or operatively coupled to the locator. This information may further be associated with additional information such as data determined from the buried utility locator device 110 using utility locator signal processing circuitry, position data, such as may be provided as an input to the locator using inertial sensors or satellite navigation systems or sensors (e.g., GPS receivers, GLONASS receivers, etc.).

In various system embodiments, the utility locator device 110 may be any of a variety of utility locator devices known or developed in the art, including, for example, the various utility locator device embodiments disclosed in the cited applications, for receiving magnetic field components of electromagnetic signals emitted from flowing AC current in a utility or electromagnetic sonde and determining information about the associated utility. For example, the locator may receive and process a magnetic field signal from a tracked distance measuring device sonde, while simultaneously receiving one processing or more signals from other sources (*e.g.,* a buried utility line or other conductor, a pipe sonde, a buried marker device, or other signal generating sources).

From these multiple magnetic field sources, the utility locator device may then determine, in multi-dimensional space (typically in three-dimensional space), the position and pose of each source. Examples of simultaneously receiving and processing multiple magnetic field signals from different sources are described in various of the cited applications. In the embodiments of the invention, the utility locator includes a dodecahedral antenna array or other similar antenna array to receive and process multiple simultaneous signals and determine magnetic field tensor gradients associated with the source. Examples of signal processing circuitry and implementation details for determining positional information from received magnetic field signals in a utility locator device, including with a dodecahedral antenna array or other similar antenna array configurations that provide multiple simultaneous signals usable to determine magnetic field tensor gradients associated with the source, are described in the various co-assigned cited patent and patent applications, including, for example, United States Patent Application 15/339,766 as well as other of the cited applications.

In the embodiments of the invention with a dodecahedral antenna array or other similar or equivalent antenna array configurations (such as, for example, octahedral antenna arrays, multiple nested antenna arrays, and the like oriented to receive magnetic field signal information sufficient to calculate tensor data), the utility locator device includes hardware and software for determining magnetic field tensor values associated with the magnetic fields provided from the tracked distance measuring device and optionally one or more buried utilities or other conductors, and store this information in a non-transitory memory for subsequent processing or transmission to a post-processing computing device or system.

In the embodiments of the invention, the utility locator device determines position data that includes a location and pose of a received signal using a method such as method embodiment 400 as illustrated in FIG. 4. At step 402 of method 400, magnetic field measurements of a received signal, which may be or may include voltage measurements, gradient tensor measurements, gradient vectors, b-field vectors and the like, are determined from received signals at each antenna coil of the locator antenna array(s). In an exemplary embodiment, the antenna array(s) include a dodecahedral antenna array which includes twelve antenna coils mounted in a dodecahedral shape on a corresponding dodecahedral frame. This set of measurements by the antenna array is notated herein as *Mₛ.* In step 404, an approximate signal origin location estimate in three dimensional space, notated herein as *Sₚ* is determined using measurement set *Mₛ* from step 402.

In some method embodiments, *Mₛ* values may be fit into or be used to determine values for a lookup table providing the approximate signal origin location, *Sₚ*. The lookup table may, for example, be derived from inverse trigonometric relationships between measured b-field vectors with gradient vectors. In some embodiments, the angle between the magnetic field and the gradient of the magnitude may be calculated from measurement set *Mₛ* values. The resultant angle may be used with a lookup table to determine a magnetic latitude descriptive of the signal's source position relative to the utility locator. In other embodiments, rather than a lookup table, an approximate origin location estimate *Sₚ* may be calculated in step 404. For example, *Sₚ* may be calculated from the inverse trigonometric relationship between measured b-field vectors with gradient vectors.

In step 406, a predicted signal source orientation and power, notated herein as *Bₘ*, is determined based on approximate origin location *Sₚ*, at step 404, and b-field values are determined from signals at one or more antenna arrays. For instance, b-field values may be b-field measurements from a tri-axial antenna array or b-field estimates from a dodecahedral antenna array given an origin location *Sₚ*. In step 408, a set of expected field measurements defined as *Cₛ* is determined from the magnetic field model of a dipole signal at approximate signal source location *Sₚ* having a predicted orientation and power *Bₘ* given a known antenna array configuration, such as a dodecahedral antenna array. In step 410, an error metric *Err* is determined, where *Err =* |*Mₛ - Cₛ*|*.* In step 412, the approximate signal origin estimate *Sₚ* is iteratively varied, providing a corresponding update to *Cₛ,* until a minimum *Err* is achieved. In step 414, the *Cₛ* set resulting in the minimized *Eᵣᵣ* value is determined, representative of the signal model for the received signal having a position (a location in space and orientation) and power.

In method examples not forming part of the present invention for determining the position of received signals, data from accelerometers, magnetometers, gyroscopic sensors, other inertial sensors and/or other similar sensor types, as well as additional global navigation sensors within the tracked distance measurement device, may be used to determine or refine position, which ma include location and pose/orientation data. Such method examples may be used in, for example, utility locator devices or other signal detection/tracking devices with antennas or antenna arrays and processing circuitry that is unable to calculate gradient tensors, or where gradient tensor calculations are not used for signal processing. Such methods may be used to determine the origin location of the received signal or signals using, for example, steps 402 and 404 of method 400 described in FIG. 4. Pose /orientation information, determined through accelerometers, magnetometers, gyroscopic, and/or like sensors within the tracked distance measuring device, may be communicated to the utility locator device, for instance, through Bluetooth or other wireless communications or wired communications. Such methods, including method embodiment 400 of FIG. 4, may be implemented in real-time or in post processing at the utility locator device or other system device.

In various embodiments where the tracked distance measuring device has a position determined by or is tracked using a dipole signal, the axis of distance measurement may be aligned with or otherwise positioned in a known, predefined orientation to the axis of the dipole signal so that a reference axis of the magnetic field dipole sonde is axially oriented with an aiming direction of the rangefinder, or both are otherwise commonly aligned so that the distance measurement from the rangefinder is in a common direction relative to the sonde dipole magnetic field.

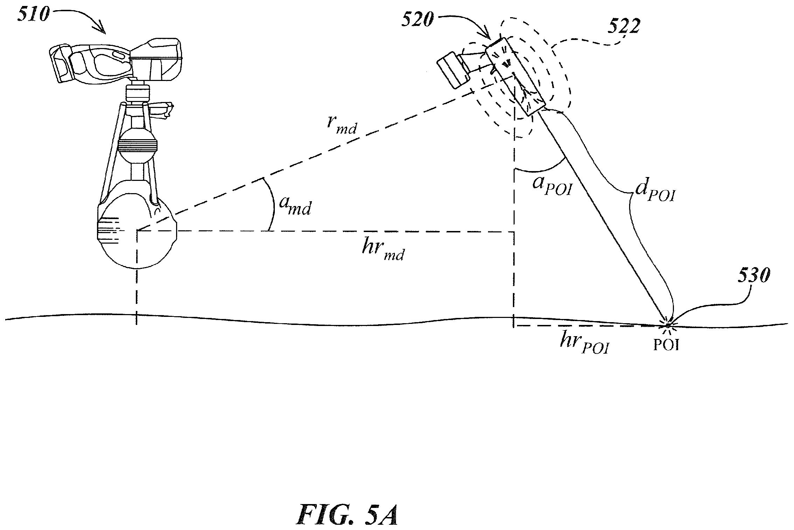

For example, as illustrated in FIG. 5A, the direction of the distance *d_{POI}* measurement made by tracked distance measuring device 520 may be set in alignment with the axis of the emitted dipole signal 522 as show. Further illustrated in FIG. 5A, values for the radial distance *r_{md}* with an angle *a_{md}* from the horizontal plane from the center of the antenna node at the utility locator device 510 towards the origin of signal 522 from the tracked distance measuring device 520 may be determined from a method such as method embodiment 400 illustrated in FIG. 4. The radial distance from utility locator device 510 to the source of signal 522 projected into the horizontal plane may be notated as *hr_{md}*.

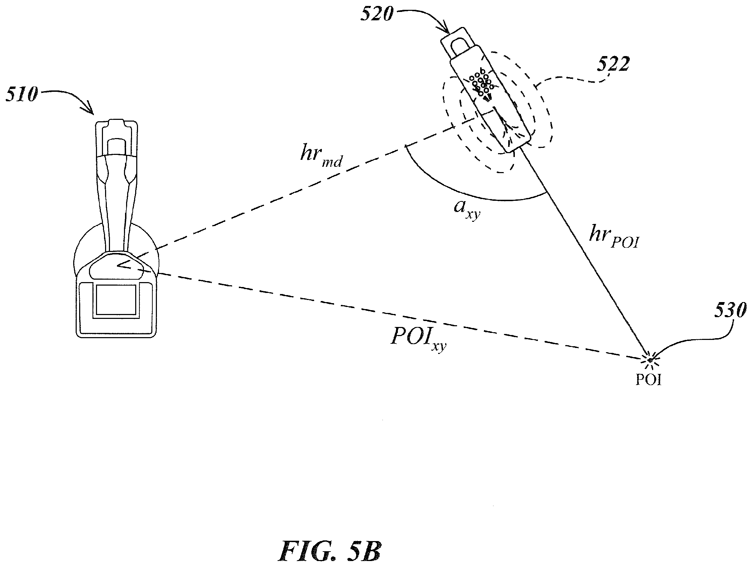

In the embodiments of the invention, pose of signal 522 is determined from a method such as method embodiment 400 illustrated in FIG. 4 such that a tilt angle *a_{POI}* value in a known pose direction is determined. A radial distance from the source of signal 522 emitted by tracked distance measuring device 520 to POI 530 projected into the horizontal plane may be notated herein as *hr_{POI}*. As illustrated in FIG. 5B, a value for angle *a_{xy}* in the horizontal plane may be determined from pose calculations of signal 522 emitted by the tracked distance measuring device 520 as described with respect to method 400 of FIG. 4. A calculation may be made to determine a radial distance in the horizontal plane from the utility locator device 510 to POI 530 (which is notated herein as *POI_{xy}*).

Method embodiment 550 of FIG. 5C uses notation and terms defined with respect to FIGs. 5A and 5B (and the correlating Specification language) to calculate a value for the POI 530 radial distance along the ground surface, *POI_{xy},* and its direction relative to the utility locator device 510. In step 552, the dipole signal position (location and pose) relative to the utility locator device 510 may be found using a signal position method (*e.g*., method 400 of FIG. 4). In step 554, a value for *hr_{md}*, the radial distance from the utility locator device to the signal source emitted by the tracked distance measuring device in the horizontal plane, may be determined, where *hr_{md}* = *r_{md}* * cos *a_{POI}*. In step 556, a value for *hr_{POI}*, the radial distance from the signal source emitted by the tracked distance measuring device in the horizontal plane, may be found, where *hr_{POI} = d_{POI}* * sin *a_{POI}*. In step 558, a value for *POI_{xy},* the radial distance of the POI location in the horizontal plane along the ground surface, may be found, where ${POI}_{xy} = \sqrt{{{hr}_{md}}^{2} + {{hr}_{POI}}^{2} - 2 ∗ {hr}_{md} ∗ {hr}_{POI} ∗ cos {a}_{xy}}$. In step 560, a direction towards the POI in the horizontal plane along the ground surface may be determined using known angle direction between the utility locator device to the signal source and known pose of the tracked distance measuring device.

In some system examples, the tracked distance measuring device may be detected or tracked by devices other than a utility locator device. In typical forms of these examples, the other detection/tracking devices include magnetic field signal antennas ans signal processing elements providing similar functionality to those of a portable utility locator.

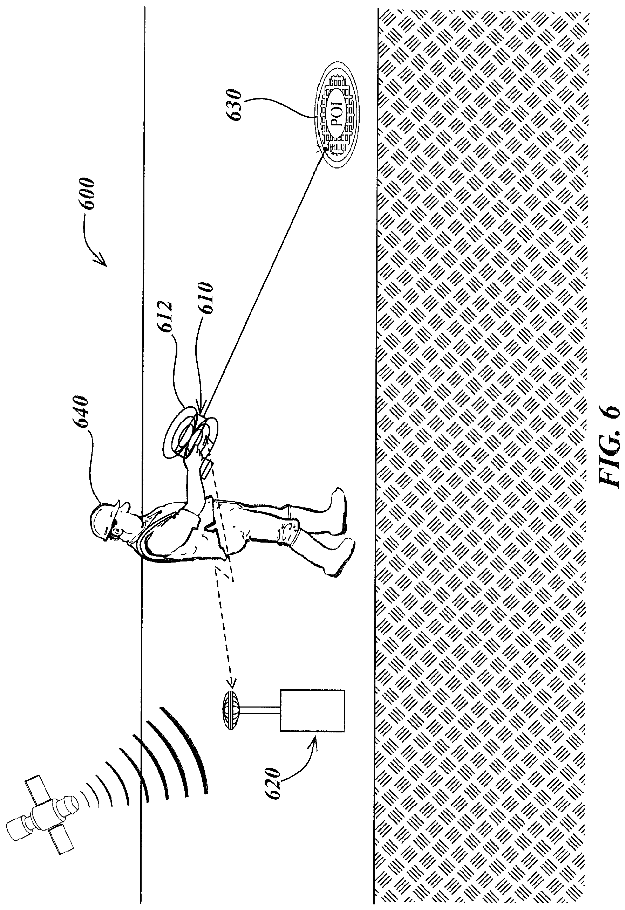

For example, some system examples may be used for POI locating and mapping without simultaneous locating of buried utilities. An exemplary POI locating and mapping system showing an example is illustrated in example 600 of FIG. 6. System example 600 may include a tracked distance measuring device 610 configured to emit a dipole signal 612 that may be received and tracked at a signal tracking device 620 while simultaneously measuring a distance to a POI 630 using a rangefinder, such as a laser rangefinder. The tracked distance measuring device 610 may be or share aspects with the tracked distance measuring device 200 illustrated in FIGs. 2A and 2B, or with other tracked distance measurement devices described herein. The signal tracking device 620 may be a base station that remains stationary as the user 640 walks around a work area and locates and measure POIs such as POI 630.

As the user 640 actuates the tracked distance measuring device 610, thereby triggering and initiating a distance measurement to POI 630 and the simultaneous transmission of signal 612, the signal tracking device 620 may receive and track the signal 612 to determine a position including location and pose in three dimensional space of signal 612 and associated tracked distance measuring device 610 (*e.g.,* utilizing method 400 of FIG. 4). The signal tracking device 620 may include one or more antenna arrays for receiving signal 612 which may be or include dodecahedral or similar antenna array and associated electronics and signal processing components configured to implement tensor gradient measurements of received signals such as described previously herein as well as in certain of the cited applications.

The signal tracking device 620 may further include GPS or other satellite navigation system sensors and/or other position sensors to determine an absolute location/position relative to the Earth's surface. Measurement data and/or other data from the tracked distance measuring device 610 may be communicated to the signal tracking device 620 via modulation of signal 612 (*e.g*., amplitude signal keying, frequency signal keying, or the like), via a separate radio transceiver device within the tracked distance measuring device 610 (*e.g*., Bluetooth, WIFI, or the like), and/or communicated via wired or other wireless connection in post processing to a utility locator device or other computing or base station device. The location of POI 630 may further be determined via method 550 described within FIG. 5C. The tracked distance measuring device 610 may further be configured with a microphone for receiving and recording audio notes and/or other input mechanisms (*e.g*., pushbuttons, levers, touchscreens, and the like) which may further be correlated with POI data.

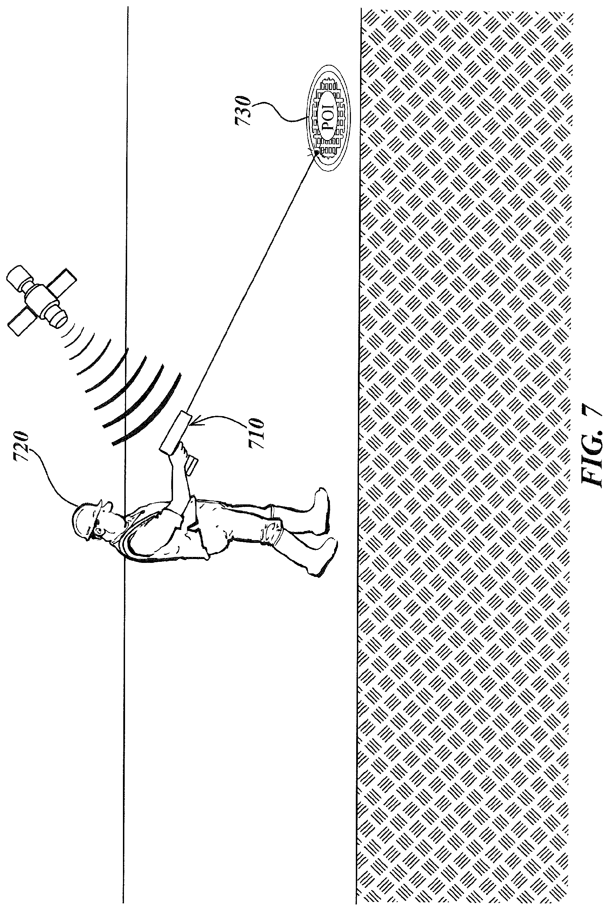

Further tracked distance measuring device examples may be standalone devices wherein tracking of positions may be implemented within the tracked distance measuring device and not a separate utility locator or other signal tracking device. As illustrated in FIG. 7, a tracked distance measuring device example 710 held by a user 720 may direct and actuate the tracked distance measuring device 710 at a POI 730, thereby initiating a measurement of distance to POI 730 correlating with the recording of the position including location in three dimensional space and pose at that location of tracked distance measuring device 710. The tracked distance measuring device 710 may include one or more position elements which may further be or include GPS or other global navigation sensors, inertial navigation sensors, altimeters or other elevation/height determining sensors, as well as gyroscopic sensors, accelerometers, or other like sensors.

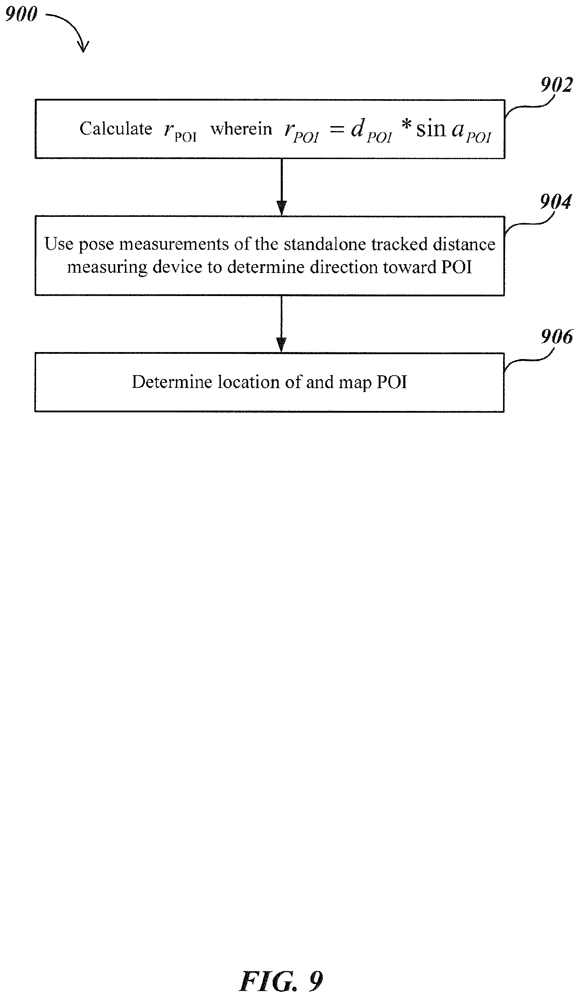

Distance to POI 730 may be determined via one or more rangefinder elements. Within tracked distance measuring device 710 the rangefinder element may be a laser rangefinder. Rangefinder elements of other standalone examples may be or include radar, sonar, LiDAR, ultrasonic, and/or other rangefinder mechanism or sensor. The location of POI 730 may be determined via distance data as well as correlated position data which may use method 900 described within FIG. 9. Processing of data within tracked distance measuring device 710 may be done through an included processing element. The processing element may be or include processor or processors and associated memory configured to perform the method and signal processing functions described herein. In some examples, processing may occur in real time or near real time in tracked distance measuring device 710 or other connected device. For instance, Bluetooth or WIFI connection may be established with a smart phone, tablet, or other computing device and data may be communicated to this device for processing. In yet other examples, tracked distance measuring device 710 may store raw measurements and signal data and be communicated via wired or wireless connection to a separate computing device for post processing of data and mapping POIs.

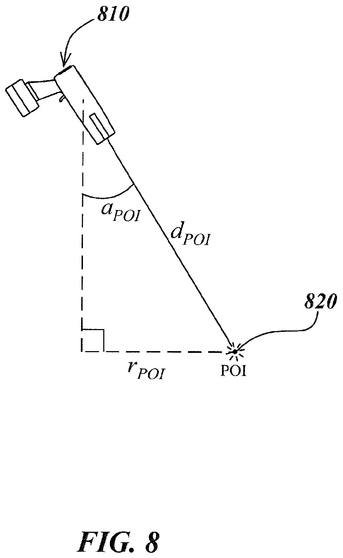

As illustrated in FIG. 8, a tracked distance measuring device example 810 measures a distance notated as *d_{POI}* towards POI 820. The tracked distance measuring device 810 may be of the variety or share aspects with the standalone tracked distance measuring device 710 described in connection with FIG. 7 herein, or with other devices described herein. For example, tracked distance measuring device 810 may include an internal position element configured to determine, track, and record position that includes location in three dimensions and pose at that location of the tracked distance measuring device 810. For instance, tracked distance measuring device 810 may include GPS or other global navigation system receivers to determine location and gyroscopic or other inertial sensors to determine pose of tracked distance measuring device 810 at that location. An angle measurement *a_{POI}* towards POI 820 may be determined from measurements of pose through gyroscopic or like sensor. Through known values, a radial measurement, *r_{POI}*, may be calculated for instance, using method example 900 as illustrated in FIG. 9.

Method example 900 of FIG. 9 may include step 902, wherein *r_{POI}* is calculated wherein *r_{POI} = d_{POI}* * sin *a_{POI}*. In step 904, pose measurements of the standalone tracked distance measuring device may be used to determine direction toward POI in the horizontal plane. In step 906, POI location may be determined and mapped from radial distance measurement *r_{POI}* and direction towards POI from prior steps.

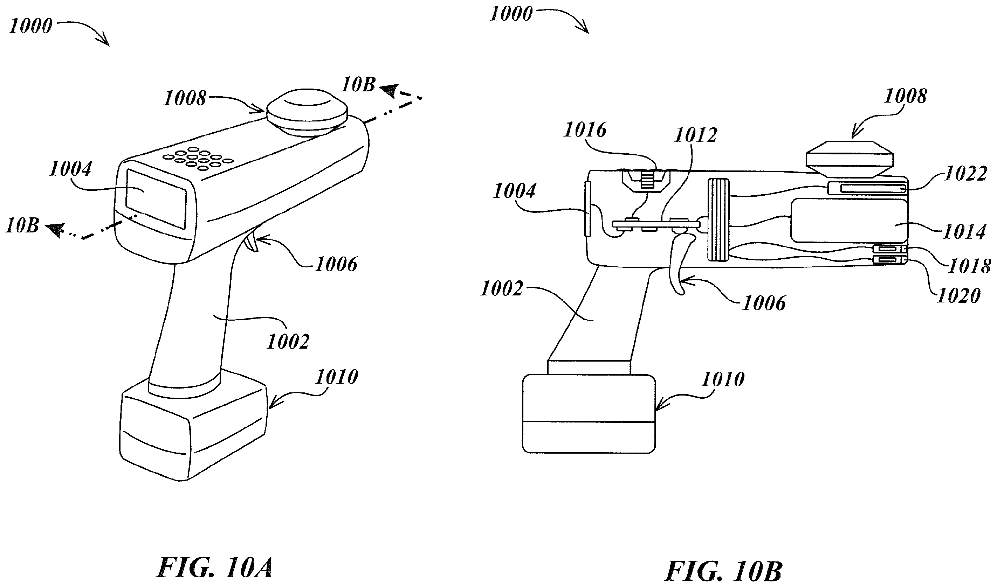

Details of a stand-alone tracked distance measuring device are illustrated with the tracked distance measuring device example 1000 shown in FIGs. 10A and 10B. The tracked distance measuring device 1000 may be or share aspects with the tracked distance measuring device example 810 of FIG. 8 or those described within method example 900 of FIG. 9.

Turning to FIG. 10A, the tracked distance measuring device example 1000 may include a housing 1002 in which a graphical user interface 1004 is positioned. An actuator/trigger mechanism 1006 may allow a user to actuate tracked distance measuring device 1000. In other examples, other types of user input mechanisms (*e.g*., pushbutton controls, switches, levers, touch screens) may be used. The tracked distance measuring device 1000 may further include a GPS receiver 1008 which may be a real time kinematic (RTK) receiver for providing RTK signal processing for improved accuracy. A battery 1010, which may be a smart battery as described in the cited applications, may be used to provide electrical power to the tracked distance measuring device 1000.

As further illustrated in FIG. 10B, the actuator 1006 may communicate with a PCB 1012 and initiate a distance measurement via rangefinder element 1014 that may correlate to a position (location and pose) of the tracked distance measuring device 1000. The rangefinder element 1014 may be a laser distance measurement rangefinder. In other examples, the rangefinder element may be or include other types of rangefinders (*e.g*., radar, sonar, LiDAR, ultrasonic, or the like).

The PCB 1012 may include a processing element using a processor or processors and associated memory that may be used to generate, receive, and process signals (*e.g.,* data signals from sensors and mechanisms and/or other system devices, and the like) as well as user input signals recorded via microphone 1016. The PCB 1012 may further include various other sensors and modules such as gyroscopic sensors or other inertial navigation sensors, radio transceiver modules for communicating with various system devices (*e.g*., Bluetooth, WIFI, or other wireless communications transceivers), and so on.

The tracked distance measuring device 1000 may further include one or more cameras, such as the telephoto camera 1018 and wide angle camera 1020. In examples 1000, the cameras 1018 and 1020 may take still or video images of a targeted POI and/or the surrounding environment. Such images may further be displayed on graphical user interface 1004 and/or communicated to a connected system device for display. Images may further be stored and correlated/associated with the dipole signals and distance to POI data. Displaying of imagery provided by cameras 1018 and/or 1020 on graphical user interface 1004 may provide a visual reference to allow a user to effectively aim the tracked distance measuring device 1000 at a POI. Imagery collected may be used to identify the POI and create and map the POI which may also include metadata identifying the POI type or other characteristics through artificial intelligence, simultaneous localization and mapping (SLAM), or image recognition methods.

The tracked distance measuring device 1000 may further include a laser 1022, which may be a green laser or other color or other daylight visible laser, which may emit a laser beam and allow or aid to visually determine and aim the tracked distance measuring device 1000 by providing a precise visual reference of where the tracked distance measurement device is being aimed.

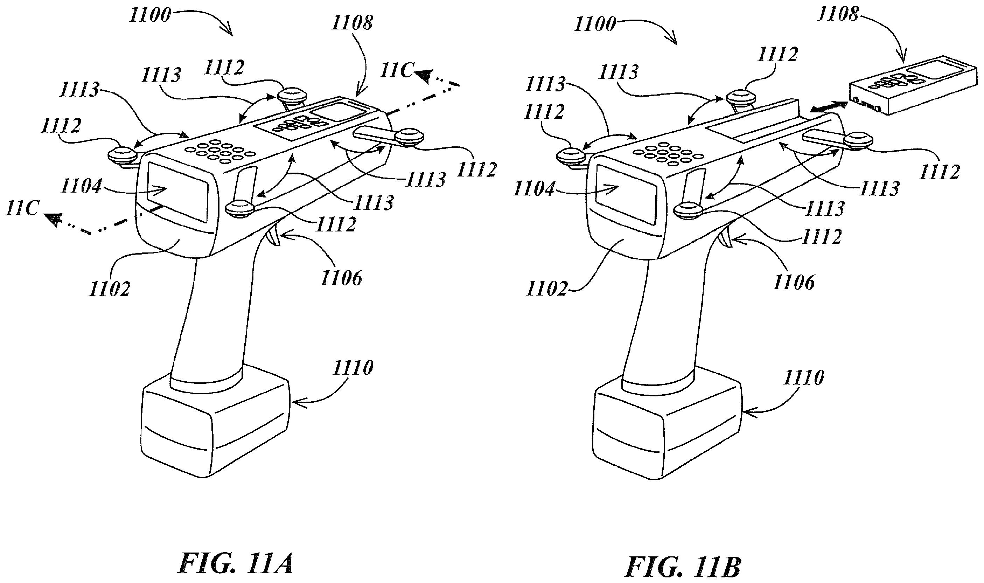

In some examples, a tracked distance measuring device may include the signal transmitter and associated electronics with the distance measuring aspects implemented in a separate distance meter (*e.g*., commercially available Leica DISTO^{™} line of laser distance meters or similar or equivalent devices). For example, as illustrated in FIGs. 11A and 11B, a tracked distance measuring device example 1100 may include a housing 1102 in which a graphical user interface 1104 may be positioned. An actuator/trigger mechanism 1106 may allow a user to actuate tracked distance measuring device 1100. In other examples, other types of user input mechanisms (*e.g*., pushbutton controls, switches, levers, touchscreens. Etc/) may be used. The tracked distance measuring device 1100 may be configured to work with a distance meter device 1108, which may be a commercially available distance meter.

For example, as demonstrated in FIG. 11B, the distance meter device 1108 may be removably attachable to the tracked distance measuring device 1100. The tracked distance measuring device 1100 may further include a battery 1110, which may be a smart battery as described in United States Patent Application 13/532,721, filed June 25, 2012, entitled MODULAR BATTERY PACK APPARATUS, SYSTEMS, AND METHODS and United States Patent Application 13/925,636, filed June 24, 2013, entitled MODULAR BATTERY PACK APPARATUS, SYSTEMS, AND METHODS INCLUDING VIRAL DATA AND/OR CODE TRANSFER of the cited applications, configured to provide electrical power to the tracked distance measuring device 1100.

The tracked distance measuring device 1100 illustrated in FIGs. 11A and 11B may further include a stowable satellite navigation antenna array 1112. The stowable satellite navigation antenna array 1112 may include multiple individual antennas, as well as associated circuitry, for receiving GPS and/or other satellite navigation signals in order to determine location and/or tilt, orientation, and pose of the tracked distance measuring device 1100. The individual antennas may be positioned along an arm that may be further configured to fold in and be stored when not in use or folded out and extend outward when in use. For instance, the arms may be configured to fold along direction of arrows 1113.

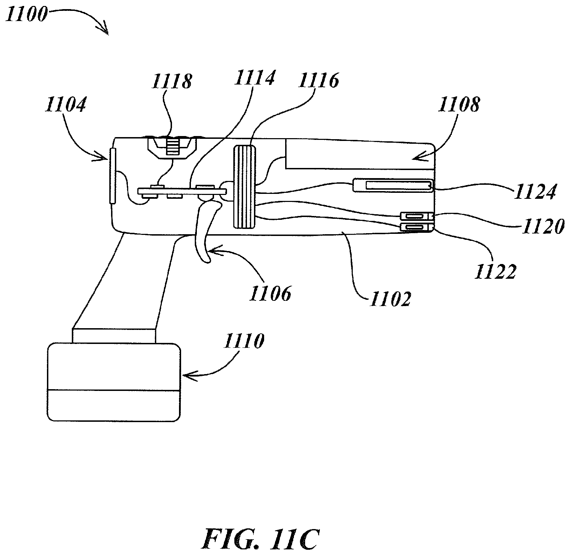

As further illustrated in FIG. 11C, the actuator 1106 may communicate with a PCB 1114 and initiate a dipole magnetic field signal from antenna 1116 and a distance measurement via distance meter device 1108, that may correlate to a position (location and pose) of the tracked distance measuring device 1100. The PCB 1114 may include a processing element using a processor or processors and associated memory that may be used to generate, receive, and process signals (*e.g*., data signals from sensors and mechanisms, distance meter device 1108, and/or other system devices, and the like) as well as user input signals recorded via microphone 1118.

The PCB 1114 may include other sensors and modules, such as gyroscopic sensors or other inertial navigation sensors, radio transceiver modules for communicating with various system devices (*e.g*., Bluetooth, WIFI, or other wireless communications transceivers), and so on. The tracked distance measuring device 1100 may further include one or more cameras such as the telephoto camera 1120 and wide angle camera 1122. In example 1100, the cameras 1120 and 1122 may take still or video images of a targeted POI and/or the surrounding environment. Such images may further be displayed on graphical user interface 1104 and/or communicated to a connected system device for display. Images may further be stored and correlated with the dipole signals and distance to POI data. Displaying of imagery provided by cameras 1120 and/or 1122 on graphical user interface 1104 may allow a user to effectively aim the tracked distance measuring device 1100 at a POI. Imagery collected may be used to identify the POI and create and map the POI which may also include metadata identifying the POI type or other characteristics through artificial intelligence, simultaneous localization and mapping (SLAM), or image recognition methods.

The tracked distance measuring device 1100 may further include a laser 1124, which may be a green laser or other color or other daylight visible laser, which may emit a laser beam and allow or aid to visually determine the aim of the tracked distance measuring device 1100.

The various tracked distance measuring devices as described herein may be used in a tracking mode to draw out or outline POIs. For example, as illustrated in FIG. 12, a user 1210 may be equipped with a tracked distance measuring device 1220, which may be any of the types described herein or similar or equivalent types, to outline POI 1230. The locations associated with POI 1230 may further be communicated to a utility locator 1240, one or more computer mapping devices 1250, and/or other computer systems and system devices. The mapped POI location 1232 may further be displayed on the graphical user interface 1242 of the utility locator 1240, display 1252 of computer mapping device 1250, and/or displayed on other system devices.

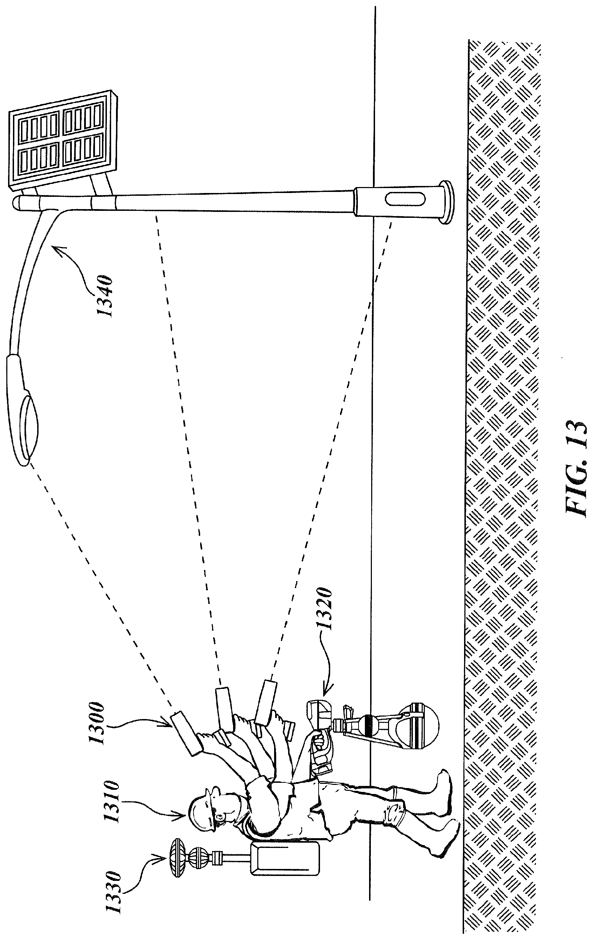

In the embodiments of the invention, tracked distance measuring device embodiments is also used to determine dimensions and or geometry of POIs or other objects within the work area. For example, as illustrated in FIG. 13, tracked distance measuring device embodiment 1300, which may be of any embodiment of the types described herein or equivalent or similar devices, may be held by a user 1310 who may further hold a utility locator device 1320 and a GPS backpack device 1330. The tracked distance measuring device 1300 is directed at a POI 1340 and may generate more tracked measurements of POI 1340. Within FIG. 13, user 1310 is shown generating three different tracked measurements of POI 1340 though a different number of measurements may be used to determine a POI's height or other dimensions or the POI's geometry.

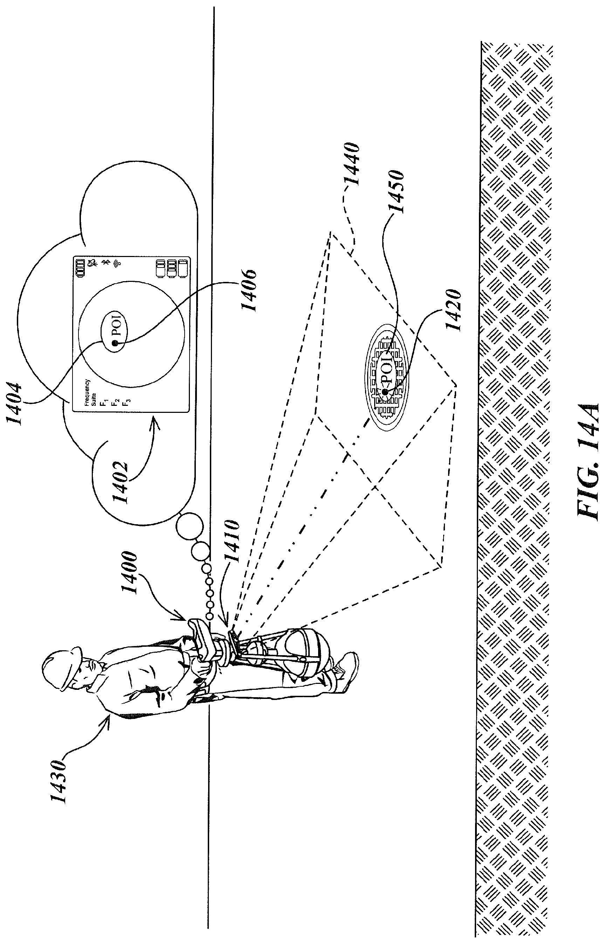

In some embodiments, tracked distance measuring capabilities may be built into an optical ground tracking device disposed upon a utility locator such as those described in the cited applications. For example, as illustrated in FIG. 14A, a utility locator device example 1400 may include an optical ground tracking device 1410 disposed upon the utility locator 1400's mast to optically track movements and locations of utility locator device 1400 as it is moved across a locate area.

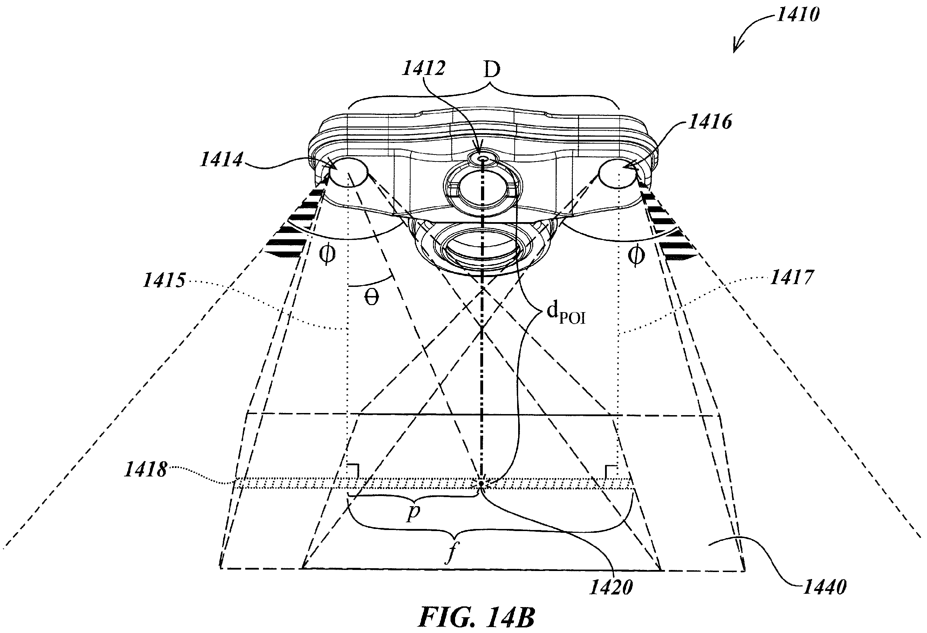

As further shown in FIG. 14B, optical ground tracking device embodiment 1410 may further include a laser 1412, which may be a green laser or other color or other daylight visible laser, that may emit a laser beam onto the ground surface. The optical ground tracking device 1410 may further include a series of cameras 1414 and 1416 configured to track the ground and determine movement of the utility locator device 1400 (FIG. 14A). Each camera may have a respective optical axis 1415 and 1417 which may be parallel and oriented in the same direction as the beam emitted by laser 1412. The laser 1412 may be located midway along the baseline between cameras 1414 and 1416 wherein the baseline may have a known measured distance notated as *D*. Each camera 1414 and 1416 may have an angle of total possible field of view notated as ϕ bisected by the optical axis 1415 or 1417 that may include measured areas truncated from view of the internal imager sensor within the respective camera 1414 or 1416. Likewise, the total distance from the optical axis to the edge of frame measured in pixels is notated herein as *f*.

Another angle, notated herein as θ, may represent the angle between the optical axis 1415 or 1417 towards laser spot 1420. The distance within the frame measured along the optical axis 1415 or 1417 and laser spot 1420 measured in pixels may be notated herein as*p*. Within the optical ground tracking device 1410 illustrated in FIG. 14B, the angle ϕ may be known and the pixel measurements of *f* and *p* may be determined from the frame collected by the camera containing the laser spot such as laser spot 1420 within the frame collected by camera 1414. A further calculation may be made to determine angle θ wherein $θ = \frac{\left(ϕ∗p\right)}{2 ∗ f}$. The optical ground tracking device 1410 may be of the variety described in United States Patent Application 14/752,834, filed June 27, 2015, entitled GROUND TRACKING APPARATUS, SYSTEMS, AND METHODS and United States Patent Application 15/187,785, filed June 21, 2016, entitled BURIED UTILITY LOCATOR GROUND TRACKING APPARATUS, SYSTEMS, AND METHODS of the cited patent and patent applications with the addition of a laser such as laser 1412.

Returning to FIG. 14A, the laser 1412 (FIG. 14B) may emit a laser beam and create a laser spot 1420 along the ground surface visually identifiable by a user 1430 and allowing or aiding the user 1430 to aim the cameras 1414 and 1416 (FIG. 14B). As illustrated in FIG. 14A, the field of view 1440 of the cameras 1414 and 1416 (FIG. 14B) of optical ground tracking device 1410 may be aimed towards a POI 1450. The laser 1412 (FIG. 14B) may be oriented within optical ground tracking device 1410 such that the laser spot 1420 may be located within the field of view 1440.

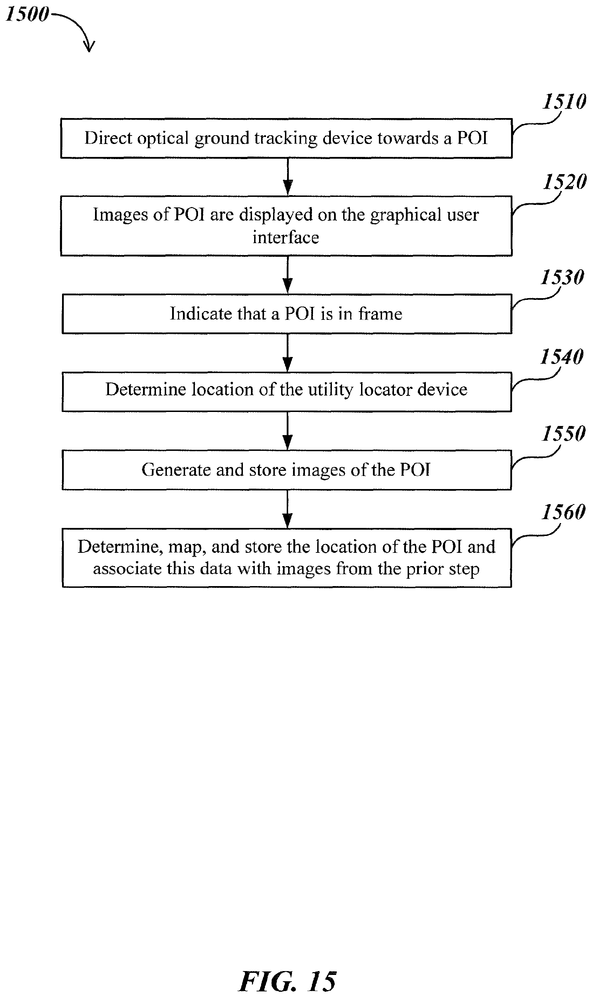

As illustrated in FIG. 14A, the laser spot 1420 may be located within the center of the field of view 1440. As the field of view 1440 is directed towards POI 1450, the optical ground tracking device 1410 may collect imagery from field of view 1440 as well as determine and map the location of the POI 1450 (*e.g.,* method 1500 of FIG. 15). The imagery collected, which may include that of the laser spot 1420 and the POI 1450 within the field of view 1440 may further be displayed upon a graphical user interface 1402 on the utility locator device 1400 (*e.g.,* POI indication 1404 or laser spot indication 1406) and/or communicated to other mapping systems or other computing devices (not illustrated).

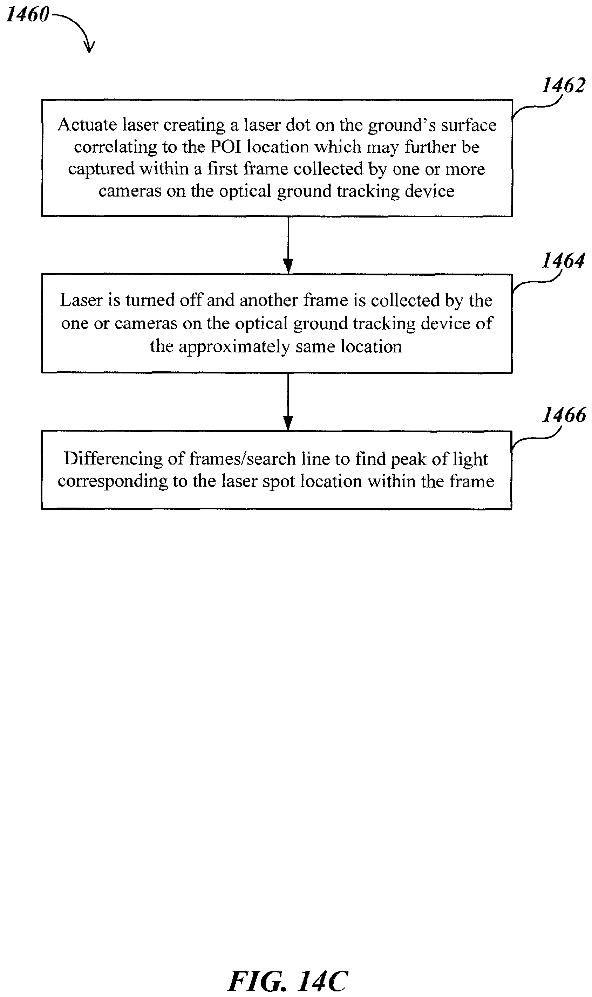

An optical ground tracking embodiment including a laser, such as optical ground tracking device 1410 of FIGs. 14A and 14B, may use a method such as method embodiment 1460 as illustrated in FIG. 14C to determine a POI's location within the field of view of one or more cameras of the optical ground tracking device. In step 1462, the laser may be turned on to create laser spot, such as laser spot 1420, along the ground surface within the field of view of one or more of the cameras on the optical ground tracking device and recorded within a first frame or set of overlapping adjacent frames. Within this method, the laser spot may correlate to the POI location on the ground. The recorded image(s) of the frame(s) from step 1462 may be stored within a memory. In step 1464, the laser may be turned off within another frame or set of overlapping frames captured by the camera or cameras and further stored within memory.

Due to frame rate of images collected within the subsequent frames and/or the user directing the laser of the optical ground tracking device towards a POI and holding the device aimed in the same direction between frames, the subsequent frames or frame sets may be of the same approximate location. In a step 1466, differencing of subsequent frames or search lines known to contain the laser spot may be carried out in order to find a peak of light corresponding to the location of the laser spot within the frame. In some embodiments, the orientation of the laser relative to the camera or cameras (*e.g*., the orientation of cameras 1414 or 1416 relative to laser 1412 of optical ground tracking device 1410 illustrated in FIG. 14B) may determine that the laser spot may occur within a single search line such as search line 1418 of FIG. 14B. In some such method embodiments, motion compensation signal processing may be used to compensate for movement between subsequent frames. For instance, a sum of absolute difference, other block-matching method, or other motion compensation methods may be used.

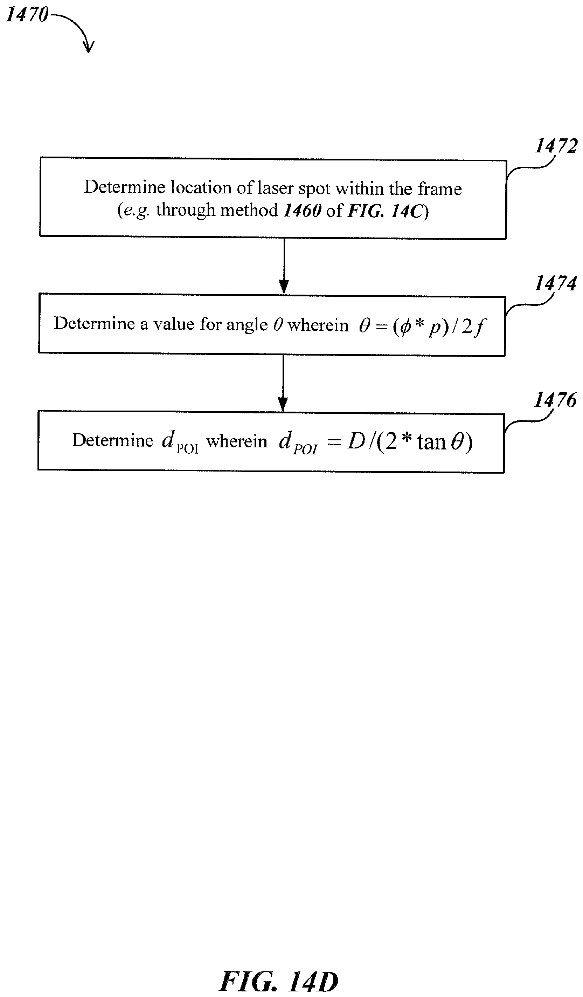

Within the optical ground tracking device 1410 illustrated in FIG. 14B, the laser 1412 may be oriented midway between cameras 1414 and 1416 and oriented such that the laser emitted may be parallel to the optical axes 1415 and 1417. Given such a geometry, the distance to laser spot 1420, which may correspond to a POI location in use, is notated as *d_{POI}* and may be determined by method 1470 described in FIG. 14D. Various terms illustrated in FIG. 14B may be used within the method 1470 of FIG. D. Method embodiment 1470 of FIG. D may include step 1472 in which the location of the laser spot may be determined in at least one camera. This step may be implemented via method 1460 of step 14C. In step 1474, a value for angle θ may be determined wherein $θ = \frac{\left(ϕ∗p\right)}{2 ∗ f}$. As the optical axis and laser beam direction are parallel (*e.g.* optical axis 1415 and beam from laser 1412 of optical ground tracking device 1410 illustrated in FIG. 14B), the angle θ and the angle originating from laser spot between the camera and laser may be equivalent. In step 1476, the measurement or range between the laser and laser spot (*e.g.,* laser 1412 and laser spot 1420 of FIG. 14B) notated as *d_{POI}* may be calculated wherein *d_{POI} = D*/(2 * tan *θ*). With a *d_{POI}* value determined through method 1470, the location of a POI corresponding to the laser may further be determined (*e.g*., through the use of method 900 of FIG. 9). The illustration of optical ground tracking device embodiment 1410 of FIG. 14B and method embodiment 1470 of FIG. 14D only illustrate using a single camera (*e.g.,* camera 1414 of FIG. 14B) to determine a *d_{POI}* value. The method 1470 of FIG. 14D may, in some embodiments, be implemented with the other camera (*e.g*., camera 1416 of FIG. 14B) or via both cameras or with additional cameras or imaging sensors (not shown).

In tracking distance measuring device embodiments equipped with an optical ground tracking having two or more cameras, such as for stereoscopic imaging, three dimensional modeling of a POI may be done. For example, the optical ground tracking device embodiment 1410 illustrated in FIG. 14B may have spatially spaced apart cameras 1414 and 1416 that may each generate an image of the same POI (*e.g.,* a POI marked by laser spot 1420) from different known angles. Methods known or developed in the art for three dimensional reconstructions from multiple images may be applied to the overlapping images of the POI generated by cameras 1414 and 1416 to generate a three dimensional model of the POI. The three dimensional POI model may further be added to a map or mapping system covering the locate area.

FIG. 15 illustrates details of a method embodiment 1500 that may be used for POI identification and mapping using an optical ground tracking device configured for distance measuring, such as the optical ground tracking device embodiment of FIGs. 14A and 14B, or other optical ground tracking device embodiments as described in the cited applications or as known or developed in the art. Process 1500 may begin at step 1510, wherein the laser and optical ground tracking device may be aimed/pointed or otherwise positioned towards a POI. In step 1520, as images of the POI come into a viewing frame of the optical ground tracker they may be displayed on the graphical user interface of the utility locator and/or other communicatively coupled system device. For example, the utility locator may be held momentarily in a position with the optical ground tracking device directed towards the POI. In some embodiments, the laser may be pulsed on and off so that it appears only in certain imaging fields, such as, for example, in every other field of view collected by one or more cameras, or in frames collected by the multiple cameras with overlapping frames as described in the cited optical ground tracking applications.

A sum of absolute differences or other similar or equivalent algorithms for motion estimation may be used to difference the frames and provide relative location of the in frame POI relative to the utility locator. In step 1530, an indication may be provided that a POI is at the location in frame at the optical ground tracking device. For example, a user may press a button on the utility locator or provide an audio note to a microphone on the utility locator or other like indication to the presence of a POI. In some embodiments, POI identification may be done using image analysis, computer vision, artificial intelligence, and/or other machine learning algorithms and methods as known or developed in the art, in either real time or in post processing.

In step 1540, the location of the utility locator device may be determined, such as, for example, is described previously herein with respect to satellite or terrestrial positioning system receivers, inertial sensors, or other positioning devices. For example, the utility locator may be equipped with GPS and/or other satellite navigation receiver, as well as the optical ground tracking device. The GPS receiver may determine the location of the utility locator relative to the Earth's surface and provide a corresponding output with positional data. In step 1550, images of the POI may be generated, associated with the POI data, and stored in a non-transitory memory. Such images may be generated through the cameras within the optical ground tracking device, or, in some embodiments, via separate cameras or imaging sensors.

In step 1560, the location of the POI may be determined and stored within the memory as data. For example, from the utility locator location data determined in a prior step and the known geometry of cameras and laser on the optical ground tracking device relative to the utility locator, the location of the POI may be determined by calculation using the various determined distances and angles and combining them in three-dimensional vector space.

Step 1560 may be implemented by a process such as that illustrated in the method embodiment 1460 of FIG. 14C for determining the location of the POI marked by the laser within the camera frame, method 1470 of FIG. 14D to determine range to the POI marked by the POI, and/or method 900 of FIG. 9 to determine the location of the POI relative to the Earth's surface and map the POI. The various steps described in method 1500 may be implemented in either real time within the utility locator and/or in post processing either within the utility locator or other system or electronic computing device.

Optionally, the POI imagery and/or other imagery collected by cameras and optical ground tracking devices as described within the various embodiments may be orthorectified and aligned with aerial imagery of the Earth's surface using orthorectification / tile alignment algorithm such as are known or developed in the art.

The various illustrative logical blocks, modules, functions, and circuits described in connection with the embodiments disclosed herein and, for example, in a processor or processing element as described herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, firmware, or any combination thereof designed to perform the functions described herein. A general purpose processor may be a microprocessor, but in the alternative, the processor may be any conventional processor, controller, microcontroller, or state machine. A processor may also be implemented as a combination of computing devices, *e.g*., a combination of a DSP and a microprocessor, a plurality of microprocessors, one or more microprocessors in conjunction with a DSP core, or any other such configuration. A processing element may further include or be coupled to one or more non-transitory memory storage elements such as ROM, RAM, SRAM, or other memory elements for storing instructions, data, and/or other information in a digital storage format.

In some configurations, embodiments of a tracked distance measuring device and/or associated utility locator device or other devices or systems as described herein may include means for performing various functions as described herein. In one aspect, the aforementioned means may be in a processing element using a processor or processors and associated memory in which embodiments reside, and which are configured to perform the functions recited by the aforementioned means. The aforementioned means may be, for example, modules or apparatus residing in a printed circuit board element or modules, or other electronic circuitry modules, to perform the functions, methods, and processes as are described herein. In another aspect, the aforementioned means may be a module or apparatus configured to perform the functions recited by the aforementioned means.

In one or more exemplary embodiments, the functions, methods and processes described may be implemented in whole or in part in hardware, software, firmware, or any combination thereof. If implemented in software, the functions may be stored on or encoded as one or more instructions or code on a non-transitory processor-readable medium and may be executed in one or more processing elements. Processor-readable media includes computer storage media. Storage media may be any available non-transitory media that can be accessed by a computer, processor, or other programmable digital device.

By way of example, and not limitation, such computer-readable media can include RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media.

It is understood that the specific order or hierarchy of steps or stages in the processes and methods disclosed are examples of exemplary approaches. Based upon design preferences, it is understood that the specific order or hierarchy of steps in the processes may be rearranged. Any method claims may present elements of the various steps in a sample order, and are not meant to be limited to the specific order or hierarchy presented or inclusion of all steps or inclusion of alternate or equivalent steps unless explicitly noted., the scope of the present invention being defined by the appended claims.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps may have been described above generally in terms of their functionality. Whether such functionality is implemented as hardware or software depends upon the particular application and design constraints imposed on the overall system. Skilled artisans may implement the described functionality in varying ways for each particular application, the scope of the present invention being defined by the appended claims.

The various illustrative logical blocks, modules, processes, methods, and/or circuits described in connection with the embodiments disclosed herein may be implemented or performed in a processing element with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps or stages of a method, process or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium such as a non-transitory memory may be externally coupled to the processor such that the processor can read information from, and write information to, the storage medium and/or read and execute instructions from the storage medium. In the alternative, the storage medium may be integral to the processor. The processor and the storage medium may reside in an ASIC. The ASIC may reside in a device such as described herein another device. In the alternative, the processor and the storage medium may reside as discrete components. Instructions to be read and executed by a processing element to implement the various methods, processes, and algorithms disclosed herein may be stored in a non-transitory memory or memories of the devices disclosed herein.

It is noted that as used herein that the terms "component," "unit," "element," or other singular terms may refer to two or more of those things. For example, a "component" may comprise multiple components. Moreover, the terms "component," "unit," "element," or other descriptive terms may be used to describe a general feature or function of a group of components, units, elements, or other items. For example, an "RFID unit" may refer to the primary function of the unit, but the physical unit may include non-RFID components, subunits, and such.

The presently claimed invention is not intended to be limited to the aspects shown herein, but is to be accorded the full scope consistent with the disclosures herein and their equivalents as reflected by the claims, wherein reference to an element in the singular is not intended to mean "one and only one" unless specifically so stated, but rather "one or more." Unless specifically stated otherwise, the term "some" refers to one or more. A phrase referring to "at least one of" a list of items refers to any combination of those items, including single members. As an example, "at least one of: a, b, or c" is intended to cover: a; b; c; a and b; a and c; b and c; and a, b and c.

The previous description of the disclosed aspects is provided to enable any person skilled in the art to make or use embodiments of the presently claimed invention. Various modifications to these aspects will be readily apparent to those skilled in the art, and the generic principles defined herein may be applied to other aspects without departing from the scope of the invention. Thus, the presently claimed invention is not intended to be limited to the aspects shown herein but is to be accorded the widest scope consistent with the appended Claims.

## Claims

1. A distance measuring system, comprising:
a utility locator device (110) including:
one or more magnetic field antenna arrays, each including a plurality of antenna coils, configured to receive magnetic field signals from one or more magnetic field signal sources;
a non-transitory memory; and
a processing element configured to process multiple simultaneous magnetic field signals received by the coil of the one or more magnetic field antenna arrays, to determine magnetic field tensor gradients associated with the one more magnetic field sources, to determine a relative position of one or more magnetic field sources and the locator and to provide the determined relative position as locator output data and/or store the determined relative position in the non-transitory memory of the locator;
a positioning element (130) configured to determine a location of the utility locator device in three dimensional space and provide output data defining the determined location;
a non-transitory memory configured to store the output data from the positioning device and the output data from the utility locator device; and
a tracked distance measuring device (140),
wherein the tracked distance measuring device is moveable relative to the utility locator device and comprises:
a housing (202);
a rangefinder element (210) configured to determine a distance or relative position to a point of interest (POI), and to provide rangefinder output data corresponding to the determined distance or relative position to the POI;
a magnetic field dipole sonde including:
an alternating current (AC) signal generator including an output configured to provide an output AC current signal at one or more predetermined frequencies; and
a magnetic field dipole antenna (208) operatively coupled to the AC signal generator output and configured to receive the output AC current signal and radiate a corresponding magnetic field dipole signal configured to be sensed by the utility locator device;
and;
an actuator mechanism (204) operatively coupled to the rangefinder element and the magnetic field dipole sonde configured to:
trigger a plurality of distance determinations; and
trigger generation of the magnetic field dipole signal in conjunction with triggering the plurality of distance determinations,
wherein the tracked distance measuring device is configured to determine the dimensions or geometry of the POI based on the plurality of distance determinations;
wherein the utility locator device is configured to:
receive a magnetic field dipole signal from the tracked distance measurement device; and
determine relative positional data comprising the location and pose of the tracked distance measuring device relative to the utility locator device;
**characterized in that**:
the utility locator device is configured to determine relative positional data comprising the location and pose of the tracked distance measuring device relative to the utility locator by:
determining field measurements, Ms, (402) at each antenna coil of the one or more magnetic field antenna arrays from the received magnetic dipole signal;
determining an approximate signal origin location, Sp, (404) using the field measurement;
determining a predicted signal orientation and power, Bm, (406) at the approximate signal origin location, Sp;
determining expected field measurements, Cs, (408) based on a magnetic field model of a dipole signal at the approximate source location, having the predicted signal orientation and power , given the known configuration of the antenna coils of the one or more magnetic field antenna arrays of the utility locator;
calculating an error metric between the determined field measurements and the expected field measurements, Err, (410) wherein Err = |Ms-Cs|; and
iteratively varying the approximate signal origin location, Sp, (412) and providing a corresponding update to the expected field measurements, Cs, until a minimum Err is determined.

2. The system of Claim 1, wherein the magnetic field sources include a buried utility or a marker device.

3. The system of Claim 1, wherein the rangefinder (210) is a laser rangefinder, an acoustic rangefinder, a radar rangefinder or a LIDAR rangefinder, or an optical ground tracking element.

4. The system of Claim 1 wherein the positioning element is a satellite positioning system receiver comprising one of: a real-time kinematic (RTK) system receiver including a reference station for providing real-time correction data; a GPS system receiver, a GLONASS system receiver and a Galileo system receiver.

5. The system of Claim 1, wherein the positioning element comprises one of: a satellite positioning system receiver, a terrestrial positioning system receiver, a cellular phone system receiver or transceiver, an inertial navigation sensor and
one or more gyroscopic sensors.

6. The system of Claim 1, wherein the output AC current signal is a CW signal or a data modulated signal.

7. The system of Claim 1, wherein the locator one or more magnetic field antennas include a dodecahedral antenna array and the locator processing element is configured to determine the relative position locator output data by processing outputs from the dodecahedral antenna array to determine gradient tensors and generating the output data based at least in part on the determined gradient tensors.

8. The system of Claim 1, wherein a reference axis of the magnetic field dipole sonde is axially oriented with an aiming direction of the rangefinder (210)

9. The system of Claim 1 further comprising a user input element comprising a microphone and an audio recorder operatively coupled to an output of the microphone for recording audio data provided from a user or a pushbutton for inputting data from a user.

10. The system of Claim 1 further comprising at least one of:
a radio transceiver module for communicating data to one or more remote system devices;
a camera element for capturing an image or video of the POI, wherein the image or video is stored in the non-transitory memory; and
a microphone and an audio recorder module for capturing a user-provided audio note associated with the POI.

11. The system of Claim 1, wherein the one or more magnetic field sources includes one of:
the magnetic field dipole sonde, and the locator output data is generated at least in part using a lookup table including approximate signal origin location data associated with the magnetic field dipole sonde;
the magnetic field dipole sonde, and the locator output data is generated at least in part using an approximate signal location estimate; and
a buried utility and the magnetic field dipole sonde, and magnetic fields from the buried utility and the magnetic field dipole sonde are simultaneously processed to provide the locator output data, wherein the locator output data includes information associated with a relative position of the utility and information associated with a relative position of the sonde.

12. A method of measuring distance with a distance measuring system comprising a utility locator device (110) including:
one or more magnetic field antennas antenna arrays, each including a plurality of antenna coils, configured to receive magnetic field signals from one or more magnetic field signal sources,
a non-transitory memory, and
a processing element configured to process multiple simultaneous magnetic field signals received by coils of the one or more magnetic field antenna arrays, to determine magnetic field tensor gradients associated with the one or more magnetic field sources, received magnetic field signals to determine relative position of the one or more magnetic field sources and the locator and to provide the determined relative position as locator output data and/or store the determined relative position in the non-transitory memory of the locator;
a positioning element (130) configured to determine a location of the utility locator device in three dimensional space and provide output data defining the determined location;
a non-transitory memory configured to store the output data from the positioning device and the output data from the utility locator device; and
a tracked distance measuring device (140),
wherein the tracked distance measuring device is moveable relative to the utility locator device and comprises:
a housing (202);
a rangefinder element (210) configured to determine for determining a distance or relative position to a point of interest (POI), and to provide rangefinder output data corresponding to the determined distance or relative position to the POI;
a magnetic field dipole sonde including:
an alternating current (AC) signal generator including an output configured to provide an output AC current signal at one or more predetermined frequencies; and
a magnetic field dipole antenna (208) operatively coupled to the AC signal generator output and configured to receive the output AC current signal and radiate a corresponding magnetic field dipole signal configured to be sensed by the utility locator device;
and;
an actuator mechanism (204) operatively coupled to the rangefinder element and the magnetic field dipole sonde configured to:
trigger a plurality of distance determinations; and
trigger generation of the magnetic field dipole signal in conjunction with triggering the plurality of distance determinations;
the method comprising:
responsive to a user input, triggering by the actuator the tracked distance measuring device to initiate in conjunction:
a plurality of measurements of distance from the rangefinder element to a point of interest (POI) (304);
transmitting a dipole magnetic field signal from the magnetic field dipole sonde antenna;
receiving (306), by the utility locator, the transmitted dipole magnetic field signal from the tracked distance measurement device;
determining relative positional data comprising the location and pose of the tracked distance measuring device relative to the utility locator device (308);
providing, from the tracked distance measurement device, the distance measurement from the rangefinder element to the point of interest (POI) as tracked distance measurement output data (310);
determining absolute positional data at the locator using the positioning element and providing the absolute positional data as an output (312);
using the plurality of distance determinations to determine the POI's dimensions or geometry; processing the absolute positional data, the tracked distance measurement data, and relative positional data in conjunction to determine absolute positional data associated with the POI (314), the method **characterized in that**:
determining relative positional data comprising the location and pose of the tracked distance measuring device relative to the utility locator device (308) comprises the steps of:
determining field measurements, Ms, (402) at each antenna coil of the one or more magnetic field antenna arrays from the received magnetic dipole signal;
determining an approximate signal origin location, Sp, (404) using the field measurements;
determining a predicted signal orientation and power, Bm, (406) at the approximate signal origin location, Sp;
determining expected field measurements, Cs, (408) based on a magnetic field model of a dipole signal at the approximate source location, having the predicted signal orientation and power, Bm, given the known configuration of the antenna coils of the one ore more magnetic field antenna arrays of the utility locator;
calculating an error metric between the determined field measurements and the expected field measurements, Err, (410) wherein Err = |Ms-Cs|; and
iteratively varying the approximate signal origin location, Sp, (412) and providing a corresponding update to the expected field measurements, Cs, until a minimum Err is determined .

13. The method of Claim 12, further comprising providing the absolute positional data as a data input to a mapping system.

14. The method of Claim 12, further comprising one of:
capturing an image of the POI in conjunction with the triggering, wherein the absolute positional data associated with the POI is associated with an image or video of the POI; and
capturing an audio note file with information associated with the POI wherein the absolute positional data associated with the POI is associated with the audio note.

15. The method of Claim 12, further comprising at least one of:
simultaneously receiving a magnetic field signal emitted from a buried utility and determining and storing information associated with the buried utility including one or more of a distance, a depth, and a positional measurement; and
simultaneously receiving a magnetic field signal from a marker device and determining and storing information associated with the marker including one or more of a distance, a depth, and a positional measurement.

## Patentansprüche

1. Entfernungsmesssystem, das Folgendes umfasst:
eine Infrastruktureinrichtungs-Ortungsvorrichtung (110), die Folgendes beinhaltet:
ein oder mehrere Magnetfeldantennenarrays, die jeweils mehrere Antennenspulen beinhalten, die dazu ausgelegt sind, Magnetfeldsignale von einer oder mehreren Magnetfeldsignalquellen zu empfangen;
einen nicht transitorischen Speicher; und
ein Verarbeitungselement, das dazu ausgelegt ist, mehrere gleichzeitige Magnetfeldsignale zu verarbeiten, die durch die Spule des einen oder der mehreren Magnetfeldantennenarrays empfangen werden, Magnetfeldtensorgradienten, die der einen oder den mehreren Magnetfeldquellen zugeordnet sind, zu bestimmen, eine relative Position einer oder mehrerer Magnetfeldquellen und des Ortungsgeräts zu bestimmen und die bestimmte relative Position als Ortungsgerätausgangsdaten bereitzustellen und/oder die bestimmte relative Position in dem nicht transitorischen Speicher des Ortungsgeräts zu speichern;
ein Positionsbestimmungselement (130), das dazu ausgelegt ist, einen Ort der Infrastruktureinrichtungs-Ortungsvorrichtung im dreidimensionalen Raum zu bestimmen und Ausgangsdaten bereitzustellen, die den bestimmten Ort definieren;
einen nicht transitorischen Speicher, der dazu ausgelegt ist, die Ausgangsdaten von der Positionsbestimmungsvorrichtung und die Ausgangsdaten von der Infrastruktureinrichtungs-Ortungsvorrichtung zu speichern; und
eine Messvorrichtung (140) für nachgeführte Entfernung, wobei die Messvorrichtung für nachgeführte Entfernung relativ zu der Infrastruktureinrichtungs-Ortungsvorrichtung beweglich ist und Folgendes umfasst:
ein Gehäuse (202);
ein Entfernungsmesserelement (210), das dazu ausgelegt ist, eine Entfernung oder eine relative Position zu einem Point of Interest (POI) zu bestimmen und Entfernungsmesserausgangsdaten bereitzustellen, die der bestimmten Entfernung oder der bestimmten relativen Position zu dem POI entsprechen;
eine Magnetfeld-Dipolsonde, die Folgendes beinhaltet:
einen Wechselstrom(AC)-Signalgenerator, der einen Ausgang beinhaltet, der dazu ausgelegt ist, ein Ausgangs-AC-Stromsignal bei einer oder mehreren vorgegebenen Frequenzen bereitzustellen; und
eine Magnetfeld-Dipolantenne (208), die operativ mit dem AC-Signalgeneratorausgang gekoppelt ist und dazu ausgelegt ist, das Ausgangs-AC-Stromsignal zu empfangen und ein entsprechendes Magnetfeld-Dipolsignal abzustrahlen, das dazu ausgelegt ist, von der Infrastruktureinrichtungs-Ortungsvorrichtung erfasst zu werden;
und;
einen Aktuatormechanismus (204), der operativ mit dem Entfernungsmesserelement und der Magnetfeld-Dipolsonde gekoppelt ist, der zu Folgendem konfiguriert ist:
mehrere Entfernungsbestimmungen auszulösen; und
in Verbindung mit dem Auslösen der mehreren Entfernungsbestimmungen eine Erzeugung des Magnetfeld-Dipolsignals auszulösen,
wobei die Messvorrichtung für nachgeführte Entfernung dazu ausgelegt ist, die Dimensionen oder die Geometrie des POI basierend auf den mehreren Entfernungsbestimmungen zu bestimmen;
wobei die Infrastruktureinrichtungs-Ortungsvorrichtung ausgelegt ist zum:
Empfangen eines Magnetfeld-Dipolsignals von der Messvorrichtung für nachgeführte Entfernung; und
Bestimmen relativer Positionsdaten, die den Ort und die Lage der Messvorrichtung für nachgeführte Entfernung relativ zu der Infrastruktureinrichtungs-Ortungsvorrichtung umfassen;
**dadurch gekennzeichnet, dass**:
die Infrastruktureinrichtungs-Ortungsvorrichtung dazu ausgelegt ist, relative Positionsdaten, die den Ort und
die Lage der Messvorrichtung für nachgeführte Entfernung relativ zu der Infrastruktureinrichtungs-Ortungsvorrichtung umfassen, durch Folgendes zu bestimmen:
Bestimmen von Feldmesswerten, Ms, (402) an jeder Antennenspule des einen oder der mehreren Magnetfeldantennenarrays aus dem empfangenen Signal des magnetischen Dipols;
Bestimmen eines ungefähren Signalursprungsorts, Sp, (404) unter Verwendung des Feldmesswerts;
Bestimmen einer vorhergesagten Signalorientierung und - leistung, Bm, (406) an dem ungefähren Signalursprungsort, Sp;
Bestimmen von erwarteten Feldmesswerten, Cs, (408) basierend auf einem Magnetfeldmodell eines Dipolsignals an dem ungefähren Quellenort, das die vorhergesagte Signalorientierung und -leistung aufweist, angesichts der bekannten Konfiguration der Antennenspulen des einen oder der mehreren Magnetfeldantennenarrays des Infrastruktureinrichtungs-Ortungsgeräts;
Berechnen einer Fehlermetrik zwischen den bestimmten Feldmesswerten und den erwarteten Feldmesswerten, Err, (410), wobei Err = |Ms-Cs| ist; und
iteratives Variieren des ungefähren Signalursprungsorts, Sp, (412) und Bereitstellen einer entsprechenden Aktualisierung der erwarteten Feldmesswerte, Cs, bis ein minimaler Err bestimmt wird.

2. System nach Anspruch 1, wobei die Magnetfeldquellen eine vergrabene Versorgungseinrichtung oder eine Markervorrichtung beinhalten.

3. System nach Anspruch 1, wobei der Entfernungsmesser (210) ein Laserentfernungsmesser, ein akustischer Entfernungsmesser, ein Radarentfernungsmesser oder ein LIDAR-Entfernungsmesser oder ein optisches Bodennachführungselement ist.

4. System nach Anspruch 1, wobei das Positionsbestimmungselement ein Satelliten-Positionsbestimmungssystem-Empfänger ist, der eines von Folgendem umfasst: einen Echtzeit-Kinematik(RTK)-Systemempfänger, der eine Referenzstation zum Bereitstellen von Echtzeit-Korrekturdaten beinhaltet; einen GPS-System-Empfänger, einen GLONASS-System-Empfänger und einen Galileo-System-Empfänger.

5. System nach Anspruch 1, wobei das Positionsbestimmungselement eines von Folgendem umfasst:
einen Satelliten-Positionsbestimmungssystem-Empfänger, einen Empfänger eines terrestrischen Positionsbestimmungssystems, einen Mobiltelefonsystem-Empfänger oder -Transceiver, einen Trägheitsnavigationssensor und ein oder mehrere Gyroskopsensoren.

6. System nach Anspruch 1, wobei das Ausgangs-AC-Stromsignal ein CW-Signal oder ein datenmoduliertes Signal ist.

7. System nach Anspruch 1, wobei die eine oder die mehreren Magnetfeldantennen des Ortungsgeräts ein Dodekaeder-Antennenarray beinhalten und das Ortungsgerät-Verarbeitungselement dazu ausgelegt ist, die relativen Positionsausgangsdaten des Ortungsgeräts durch Verarbeiten von Ausgaben von dem Dodekaeder-Antennenarray zu bestimmen, um Gradiententensoren zu bestimmen und die Ausgangsdaten zumindest teilweise basierend auf den bestimmten Gradiententensoren zu erzeugen.

8. System nach Anspruch 1, wobei eine Referenzachse der Magnetfeld-Dipolsonde axial auf eine Zielrichtung des Entfernungsmessers (210) ausgerichtet ist.

9. System nach Anspruch 1, das ferner ein Benutzereingabeelement umfasst, das ein Mikrofon und einen Audiorecorder, der operativ mit einem Ausgang des Mikrofons gekoppelt ist, um Audiodaten aufzuzeichnen, die von einem Benutzer bereitgestellt werden, oder einen Druckknopf zum Eingeben von Daten von einem Benutzer umfasst.

10. System nach Anspruch 1, das ferner zumindest eines der Folgenden umfasst:
ein Funk-Transceiver-Modul zum Übermitteln von Daten an eine oder mehrere entfernte Systemvorrichtungen;
ein Kameraelement zum Erfassen eines Bildes oder Videos des POIs, wobei das Bild oder Video in dem nicht transitorischen Speicher gespeichert wird; und
ein Mikrofon und ein Audiorecorder-Modul zum Erfassen einer vom Benutzer bereitgestellten Audionotiz, die dem POI zugeordnet ist.

11. System nach Anspruch 1, wobei die eine oder die mehreren Magnetfeldquellen eines von Folgendem beinhalten:
die Magnetfeld-Dipolsonde, wobei die Ortungsgerät-Ausgangsdaten zumindest teilweise unter Verwendung einer Nachschlagetabelle erzeugt werden, die ungefähre Signalursprungsortdaten beinhaltet, die der Magnetfeld-Dipolsonde zugeordnet sind;
die Magnetfeld-Dipolsonde, wobei die Ortungsgerät-Ausgangsdaten zumindest teilweise unter Verwendung einer ungefähren Signalortsschätzung erzeugt werden; und
eine vergrabene Versorgungseinrichtung und die Magnetfeld-Dipolsonde, wobei Magnetfelder von der vergrabenen Versorgungseinrichtung und der Magnetfeld-Dipolsonde gleichzeitig verarbeitet werden, um die Ortungsgerät-Ausgangsdaten bereitzustellen, wobei die Ortungsgerät-Ausgangsdaten Informationen, die einer relativen Position der Versorgungseinrichtung zugeordnet sind, und Informationen, die einer relativen Position der Sonde zugeordnet sind, beinhalten.

12. Verfahren zum Messen einer Entfernung mit einem Entfernungsmesssystem, das eine Infrastruktureinrichtungs-Ortungsvorrichtung (110) umfasst, die Folgendes beinhaltet:
ein oder mehrere Magnetfeldantennen-Antennenarrays, die jeweils mehrere Antennenspulen beinhalten, die dazu ausgelegt sind, Magnetfeldsignale von einer oder mehreren Magnetfeldsignalquellen zu empfangen,
einen nicht transitorischen Speicher, und
ein Verarbeitungselement, das dazu ausgelegt ist, mehrere gleichzeitige Magnetfeldsignale zu verarbeiten, die durch Spulen des einen oder der mehreren Magnetfeldantennenarrays empfangen werden, um Magnetfeldtensorgradienten, die der einen oder den mehreren Magnetfeldquellen zugeordnet sind, zu bestimmen, wobei die empfangenen Magnetfeldsignale dazu dienen, die relative Position der einen oder der mehreren Magnetfeldquellen und des Ortungsgeräts zu bestimmen und die bestimmte relative Position als Ortungsgerätausgangsdaten bereitzustellen und/oder die bestimmte relative Position in dem nicht transitorischen Speicher des Ortungsgeräts zu speichern;
ein Positionsbestimmungselement (130), das dazu ausgelegt ist, einen Ort der Infrastruktureinrichtungs-Ortungsvorrichtung im dreidimensionalen Raum zu bestimmen und Ausgangsdaten bereitzustellen, die den bestimmten Ort definieren;
einen nicht transitorischen Speicher, der dazu ausgelegt ist, die Ausgangsdaten von der Positionsbestimmungsvorrichtung und die Ausgangsdaten von der Infrastruktureinrichtungs-Ortungsvorrichtung zu speichern; und
eine Messvorrichtung (140) für nachgeführte Entfernung, wobei die Messvorrichtung für nachgeführte Entfernung relativ zu der Infrastruktureinrichtungs-Ortungsvorrichtung beweglich ist und Folgendes umfasst:
ein Gehäuse (202);
ein Entfernungsmesserelement (210), das dazu ausgelegt ist, eine Entfernung oder relative Position zu einem Point of Interest (POI) zu bestimmen und Entfernungsmesserausgangsdaten bereitzustellen, die der bestimmten Entfernung oder relativen Position zu dem POI entsprechen ;
eine Magnetfeld-Dipolsonde, die Folgendes beinhaltet:
einen Wechselstrom(AC)-Signalgenerator, der einen Ausgang beinhaltet, der dazu ausgelegt ist, ein Ausgangs-AC-Stromsignal bei einer oder mehreren vorgegebenen Frequenzen bereitzustellen; und
eine Magnetfeld-Dipolantenne (208), die operativ mit dem AC-Signalgeneratorausgang gekoppelt ist und dazu ausgelegt ist, das Ausgangs-AC-Stromsignal zu empfangen und ein entsprechendes Magnetfeld-Dipolsignal abzustrahlen, das dazu ausgelegt ist, von der Infrastruktureinrichtungs-Ortungsvorrichtung erfasst zu werden;
und;
einen Aktuatormechanismus (204), der operativ mit dem Entfernungsmesserelement und der Magnetfeld-Dipolsonde gekoppelt ist, der zu Folgendem konfiguriert ist:
mehrere Entfernungsbestimmungen auszulösen; und
in Verbindung mit dem Auslösen der mehreren Entfernungsbestimmungen eine Erzeugung des Magnetfeld-Dipolsignals auszulösen;
wobei das Verfahren Folgendes umfasst:
als Reaktion auf eine Benutzereingabe durch den Aktuator die Messvorrichtung für nachgeführte Entfernung auszulösen, um in Verbindung Folgendes zu initiieren:
mehrere Messungen der Entfernung von dem Entfernungsmesserelement zu einem Point of Interest (POI)(304);
Senden eines Dipolmagnetfeldsignals von der Magnetfeld-Dipolsondenantenne;
Empfangen (306) des gesendeten Dipol-Magnetfeldsignals von der Messvorrichtung für nachgeführte Entfernung durch das Infrastruktureinrichtungs-Ortungsgerät;
Bestimmen von relativen Positionsdaten, die den Ort und die Lage der Messvorrichtung für nachgeführte Entfernung relativ zu der Infrastruktureinrichtungs-Ortungsvorrichtung (308) umfassen;
Bereitstellen des Entfernungsmesswerts von dem Entfernungsmesserelement zu dem Point of Interest (POI) als Ausgangsmessdaten (310) der nachgeführten Entfernung von der Messvorrichtung für nachgeführte Entfernung;
Bestimmen absoluter Positionsdaten an dem Ortungsgerät unter Verwendung des Positionsbestimmungselements und Bereitstellen der absoluten Positionsdaten als eine Ausgabe (312);
Verwenden der mehreren Entfernungsbestimmungen, um die Dimensionen oder die Geometrie des POI zu bestimmen;
Verarbeiten der absoluten Positionsdaten, der Messdaten der nachgeführten Entfernung und der relativen Positionsdaten in Verbindung mit dem Bestimmen absoluter Positionsdaten, die dem POI zugeordnet sind (314), wobei das Verfahren **dadurch gekennzeichnet ist, dass**:
das Bestimmen relativer Positionsdaten den Ort und die Lage der Messvorrichtung für nachgeführte Entfernung relativ zu der Infrastruktureinrichtungs-Ortungsvorrichtung (308) umfasst, wobei das Verfahren die folgenden Schritte umfasst:
Bestimmen von Feldmesswerten, Ms, (402) an jeder Antennenspule des einen oder der mehreren Magnetfeldantennenarrays aus dem empfangenen Signal des magnetischen Dipols;
Bestimmen eines ungefähren Signalursprungsorts, Sp, (404) unter Verwendung der Feldmesswerte;
Bestimmen einer vorhergesagten Signalorientierung und - leistung, Bm, (406) an dem ungefähren Signalursprungsort, Sp;
Bestimmen von erwarteten Feldmesswerten, Cs, (408) basierend auf einem Magnetfeldmodell eines Dipolsignals an dem ungefähren Quellenort, das die vorhergesagte Signalorientierung und -leistung, Bm, aufweist, angesichts der bekannten Konfiguration der Antennenspulen des einen oder der mehreren Magnetfeldantennenarrays des Infrastruktureinrichtungs-Ortungsgeräts;
Berechnen einer Fehlermetrik zwischen den bestimmten Feldmesswerten und den erwarteten Feldmesswerten, Err, (410), wobei Err = |Ms-Cs| ist; und
iteratives Variieren des ungefähren Signalursprungsorts, Sp, (412) und Bereitstellen einer entsprechenden Aktualisierung der erwarteten Feldmesswerte, Cs, bis ein minimaler Err bestimmt wird.

13. Verfahren nach Anspruch 12, ferner umfassend das Bereitstellen der absoluten Positionsdaten als eine Dateneingabe in ein Abbildungssystem.

14. Verfahren nach Anspruch 12, das ferner eines der Folgenden umfasst:
Erfassen eines Bildes des POI in Verbindung mit dem Auslösen, wobei die absoluten Positionsdaten, die dem POI zugeordnet sind, einem Bild oder Video des POI zugeordnet sind; und
Erfassen einer Audionotizdatei mit Informationen, die dem POI zugeordnet sind, wobei die absoluten Positionsdaten, die dem POI zugeordnet sind, der Audionotiz zugeordnet sind.

15. Verfahren nach Anspruch 12, das ferner wenigstens eines der Folgenden umfasst:
gleichzeitiges Empfangen eines Magnetfeldsignals, das von einer vergrabenen Versorgungseinrichtung emittiert wird, und Bestimmen und Speichern von Informationen, die der vergrabenen Versorgungseinrichtung zugeordnet sind, einschließlich eines oder mehrerer einer Entfernung, einer Tiefe und/oder eines Positionsmesswerts; und
gleichzeitiges Empfangen eines Magnetfeldsignals von einer Markervorrichtung und Bestimmen und Speichern von Informationen, die dem Marker zugeordnet sind, einschließlich eines oder mehrerer einer Entfernung, einer Tiefe und eines Positionsmesswerts.

## Revendications

1. Système de mesure de distance, comprenant :
un dispositif (110) de localisation de services incluant :
un ou plusieurs réseaux d'antennes de champ magnétique, comprenant chacun une pluralité de bobines d'antenne, configurés pour recevoir des signaux de champ magnétique provenant d'une ou de plusieurs sources de signaux de champ magnétique ;
une mémoire non transitoire ; et
un élément de traitement configuré pour traiter de multiples signaux de champ magnétique simultanés reçus par la bobine du ou des réseaux d'antennes de champ magnétique, pour déterminer des gradients de tenseur de champ magnétique associés à la ou aux sources de champ magnétique, pour déterminer une position relative d'une ou plusieurs sources de champ magnétique et du localisateur et pour fournir la position relative déterminée en tant que données de sortie du localisateur et/ou stocker la position relative déterminée dans la mémoire non transitoire du localisateur ;
un élément (130) de positionnement configuré pour déterminer un emplacement du dispositif de localisation de services dans un espace tridimensionnel et fournir des données de sortie définissant l'emplacement déterminé ;
une mémoire non transitoire configurée pour stocker les données de sortie provenant du dispositif de positionnement et les données de sortie provenant du dispositif de localisation de services ; et
un dispositif (140) de mesure de distance suivie,
le dispositif de mesure de distance suivie étant mobile par rapport au dispositif de localisation de services et comprenant :
un boîtier (202) ;
un élément (210) de télémètre configuré pour déterminer une distance ou une position relative par rapport à un point d'intérêt (POI), et pour fournir des données de sortie de télémètre correspondant à la distance ou la position relative déterminée par rapport au POI ;
une sonde dipôle de champ magnétique incluant :
un générateur de signal de courant alternatif (CA) comprenant une sortie configurée pour fournir un signal de courant CA de sortie à une ou plusieurs fréquences prédéterminées ; et
une antenne dipôle (208) de champ magnétique couplée fonctionnellement à la sortie du générateur de signal CA et configurée pour recevoir le signal de courant CA de sortie et rayonner un signal de dipôle de champ magnétique correspondant configuré pour être détecté par le dispositif de localisation de services ;
et ;
un mécanisme (204) d'actionneur couplé fonctionnellement à l'élément de télémètre et à la sonde dipôle de champ magnétique configuré pour :
déclencher une pluralité de déterminations de distance ; et
déclencher la génération du signal de dipôle de champ magnétique en conjonction avec le déclenchement de la pluralité de déterminations de distance,
le dispositif de mesure de distance suivie étant configuré pour déterminer les dimensions ou la géométrie du POI sur la base de la pluralité de déterminations de distance ;
le dispositif de localisation de services étant configuré pour :
recevoir un signal de dipôle de champ magnétique provenant du dispositif de mesure de distance suivie ; et
déterminer des données de position relatives comprenant l'emplacement et la pose du dispositif de mesure de distance suivie par rapport au dispositif de localisation de services ;
**caractérisé en ce que** :
le dispositif de localisation de services est configuré pour déterminer des données de position relatives comprenant l'emplacement et la pose du dispositif de mesure de distance suivie par rapport au dispositif de localisation de services par :
la détermination de mesures de champ, Ms, (402) au niveau de chaque bobine d'antenne du ou des réseaux d'antennes de champ magnétique à partir du signal de dipôle magnétique reçu ;
la détermination d'un emplacement approximatif d'origine de signal, Sp, (404) à l'aide de la mesure de champ ;
la détermination d'une orientation et d'une puissance de signal prédite, Bm, (406) à l'emplacement approximatif d'origine de signal, Sp ;
la détermination de mesures de champ attendues, Cs, (408) sur la base d'un modèle de champ magnétique d'un signal de dipôle à l'emplacement approximatif de source, ayant la puissance et l'orientation du signal prédites, étant donné la configuration connue des bobines d'antenne du ou des réseaux d'antennes de champ magnétique du localisateur de services ;
le calcul d'une métrique d'erreur entre les mesures de champ déterminées et les mesures de champ attendues, Err, (410) où Err = |Ms-Cs| ; et
la modification itérative de l'emplacement approximatif d'origine de signal Sp (412) et la mise à jour correspondante des mesures de champ attendues Cs jusqu'à ce qu'un Err minimum soit déterminé.

2. Système selon la revendication 1, les sources de champ magnétique incluant un service enterré ou un dispositif de repérage.

3. Système selon la revendication 1, le télémètre (210) étant un télémètre laser, un télémètre acoustique, un télémètre radar ou un télémètre LIDAR, ou un élément optique de poursuite au sol.

4. Système selon la revendication 1, l'élément de positionnement étant un récepteur de système de positionnement par satellite comprenant un élément parmi : un récepteur de système cinématique en temps réel (RTK) comprenant une station de référence pour fournir des données de correction en temps réel ; un récepteur de système GPS, un récepteur de système GLONASS et un récepteur de système Galileo.

5. Système selon la revendication 1, l'élément de positionnement comprenant un élément parmi : un récepteur de système de positionnement par satellite, un récepteur de système de positionnement terrestre, un récepteur ou émetteur-récepteur de système de téléphone cellulaire, un capteur de navigation inertielle et
un ou plusieurs capteurs gyroscopiques.

6. Système selon la revendication 1, le signal de courant CA de sortie étant un signal CW ou un signal modulé en données.

7. Système selon la revendication 1, l'antenne ou les antennes de champ magnétique de localisateur comprenant un réseau d'antennes dodécaédrique et l'élément de traitement de localisateur étant configuré pour déterminer les données de sortie de localisateur de position relative en traitant des sorties provenant du réseau d'antennes dodécaédrique pour déterminer des tenseurs de gradient et en générant les données de sortie sur la base, au moins en partie, des tenseurs de gradient déterminés.

8. Système selon la revendication 1, un axe de référence de la sonde dipôle de champ magnétique étant orienté axialement avec une direction de visée du télémètre (210).

9. Système selon la revendication 1, comprenant en outre un élément d'entrée d'utilisateur comprenant un microphone et un enregistreur audio couplé fonctionnellement à une sortie du microphone pour enregistrer des données audio fournies par un utilisateur ou un bouton-poussoir pour introduire des données provenant d'un utilisateur.

10. Système selon la revendication 1, comprenant en outre au moins un élément parmi :
un module émetteur-récepteur radio pour communiquer des données à un ou plusieurs dispositifs de système distant ;
un élément de caméra pour capturer une image ou une vidéo du POI, l'image ou la vidéo étant stockée dans la mémoire non transitoire ; et
un microphone et un module enregistreur audio pour capturer une note audio fournie par l'utilisateur associée au POI.

11. Système selon la revendication 1, la ou les sources de champ magnétique comprenant un élément parmi :
la sonde dipôle de champ magnétique, et les données de sortie du localisateur étant générées au moins en partie à l'aide d'une table de consultation comprenant des données d'emplacement approximatif d'origine de signal associées à la sonde dipôle de champ magnétique ;
la sonde dipôle de champ magnétique, et les données de sortie du localisateur étant générées au moins en partie à l'aide d'une estimation approximative d'emplacement de signal ; et
un service enterré et la sonde dipôle de champ magnétique, et des champs magnétiques provenant du service enterré et de la sonde dipôle de champ magnétique étant traitées simultanément pour fournir les données de sortie du localisateur, les données de sortie du localisateur comprenant des informations associées à une position relative du service et des informations associées à une position relative de la sonde.

12. Procédé de mesure de distance par un système de mesure de distance comprenant un dispositif (110) de localisation de services comprenant :
un ou plusieurs réseaux d'antennes de champ magnétique, comprenant chacun une pluralité de bobines d'antenne, configurés pour recevoir des signaux de champ magnétique provenant d'une ou de plusieurs sources de signal de champ magnétique,
une mémoire non transitoire, et
un élément de traitement configuré pour traiter de multiples signaux de champ magnétique simultanés reçus par des bobines du ou des réseaux d'antennes de champ magnétique, pour déterminer des gradients de tenseurs de champ magnétique associés à la ou aux sources de champ magnétique, des signaux de champ magnétique reçus pour déterminer la position relative de la ou des sources de champ magnétique et du localisateur et pour fournir la position relative déterminée en tant que données de sortie du localisateur et/ou stocker la position relative déterminée dans la mémoire non transitoire du localisateur ;
un élément (130) de positionnement configuré pour déterminer un emplacement du dispositif de localisation de services dans un espace tridimensionnel et fournir des données de sortie définissant l'emplacement déterminé ;
une mémoire non transitoire configurée pour stocker les données de sortie provenant du dispositif de positionnement et les données de sortie provenant du dispositif de localisation de services ; et
un dispositif (140) de mesure de distance suivie,
le dispositif de mesure de distance suivie étant mobile par rapport au dispositif de localisation de services et comprenant :
un boîtier (202) ;
un élément (210) de télémètre configuré pour déterminer une distance ou une position relative par rapport à un point d'intérêt (POI), et pour fournir des données de sortie de télémètre correspondant à la distance ou la position relative déterminée par rapport au POI ;
une sonde dipôle de champ magnétique incluant :
un générateur de signal de courant alternatif (CA) comprenant une sortie configurée pour fournir un signal de courant CA de sortie à une ou plusieurs fréquences prédéterminées ; et
une antenne dipôle (208) de champ magnétique couplée fonctionnellement à la sortie du générateur de signal CA et configurée pour recevoir le signal de courant CA de sortie et rayonner un signal de dipôle de champ magnétique correspondant configuré pour être détecté par le dispositif de localisation de services ;
et ;
un mécanisme (204) d'actionneur couplé fonctionnellement à l'élément de télémètre et à la sonde dipôle de champ magnétique configuré pour :
déclencher une pluralité de déterminations de distance ; et
déclencher la génération du signal de dipôle de champ magnétique en conjonction avec le déclenchement de la pluralité de déterminations de distance ;
le procédé comprenant :
en réponse à une entrée de l'utilisateur, le déclenchement par l'actionneur du dispositif de mesure de distance suivie pour lancer conjointement :
une pluralité de mesures de distance de l'élément de télémètre à un point d'intérêt (POI)(304) ;
l'émission d'un signal de champ magnétique de dipôle depuis l'antenne sonde dipôle de champ magnétique ;
la réception (306), par le localisateur de services, du signal de champ magnétique de dipôle transmis en provenance du dispositif de mesure de distance suivie ;
la détermination de données de position relatives comprenant l'emplacement et la pose du dispositif de mesure de distance suivie par rapport au dispositif de localisation de services (308) ;
la fourniture, à partir du dispositif de mesure de distance suivie, de la mesure de distance de l'élément de télémètre au point d'intérêt (POI) en tant que données de sortie de mesure de distance suivie (310) ;
la détermination de données de position absolues au niveau du localisateur à l'aide de l'élément de positionnement et la fourniture des données de position absolues en tant que sortie (312) ;
l'utilisation de la pluralité de déterminations de distance pour déterminer les dimensions ou la géométrie du POI ;
le traitement des données de position absolues, des données de mesure de distance suivie, et des données de position relatives en conjonction pour déterminer des données de position absolues associées au POI (314), le procédé étant **caractérisé en ce que** :
la détermination de données de position relatives comprenant l'emplacement et la pose du dispositif de mesure de distance suivie par rapport au dispositif de localisation de services (308) comprend les étapes de :
la détermination de mesures de champ, Ms, (402) au niveau de chaque bobine d'antenne du ou des réseaux d'antennes de champ magnétique à partir du signal de dipôle magnétique reçu ;
la détermination d'un emplacement approximatif d'origine de signal, Sp, (404) à l'aide des mesures de champ ;
la détermination d'une orientation et d'une puissance de signal prédite, Bm, (406) à l'emplacement approximatif d'origine de signal, Sp ;
la détermination de mesures de champ attendues, Cs, (408) sur la base d'un modèle de champ magnétique d'un signal de dipôle à l'emplacement approximatif de source, ayant la puissance et l'orientation du signal prédites, Bm, étant donné la configuration connue des bobines d'antenne du ou des réseaux d'antennes de champ magnétique du localisateur de services ;
le calcul d'une métrique d'erreur entre les mesures de champ déterminées et les mesures de champ attendues, Err, (410) où Err = |Ms-Cs| ; et
la modification itérative de l'emplacement approximatif d'origine de signal Sp (412) et la mise à jour correspondante des mesures de champ attendues Cs jusqu'à ce qu'un Err minimum soit déterminé.

13. Procédé selon la revendication 12, comprenant en outre la fourniture des données de position absolues en tant qu'entrée de données à un système de cartographie.

14. Procédé selon la revendication 12, comprenant en outre une action parmi :
la capture d'une image du POI conjointement avec le déclenchement, les données de position absolues associées au POI étant associées à une image ou une vidéo du POI ; et
la capture d'un fichier de notes audio avec des informations associées au POI, les données de position absolues associées au POI étant associées à la note audio.

15. Procédé selon la revendication 12, comprenant en outre au moins une action parmi :
la réception simultanée d'un signal de champ magnétique émis par un service enterré et la détermination et le stockage d'informations associées au service enterré, y compris un ou plusieurs éléments parmi une distance, une profondeur et une mesure de position ; et
la réception simultanée d'un signal de champ magnétique provenant d'un dispositif de repérage et la détermination et le stockage d'informations associées au repère comprenant un ou plusieurs éléments parmi une distance, une profondeur et une mesure de position.
